# EUROPÄISCHE PATENTSCHRIFT

(11) **EP 4 648 995 B1**
(45) Veröffentlichungstag und Bekanntmachung des Hinweises auf die Patenterteilung: **07.10.2026**
(21) Anmeldenummer: 24700045.8
(22) Anmeldetag: 02.01.2024
(51) Int. Cl.: B60W 30/02, B60W 40/10, B60W 50/00

(54) **VERFAHREN ZUM STEUERN EINES FAHRZEUGS DURCH AUSFÜHREN ZUMINDEST EINES FAHRDYNAMIKEINGRIFFS**
METHOD FOR CONTROLLING A VEHICLE BY PERFORMING AT LEAST ONE VEHICLE DYNAMICS INTERVENTION
PROCEDE DE COMMANDE D'UN VEHICULE PAR L'EXECUTION D'AU MOINS UNE ACTION DYNAMIQUE DE CONDUITE

(30) Priorität: 13.01.2023 DE 102023100748
(43) Veröffentlichungstag der Anmeldung: 19.11.2025
(73) Patentinhaber: ZF CV Systems Global GmbH, 3006 Bern (CH)
(72) Erfinder: BIEBER, Benjamin, 30900 Wedemark (DE); BÖTTCHER, Jonas, 30455 Hannover (DE); PLÄHN, Klaus, 30926 Seelze (DE); WULF, Oliver, 31535 Neustadt (DE)
(74) Vertreter: Rabe, Dirk-Heinrich
(86) Internationale Anmeldenummer: PCT/EP2024/050033
(87) Internationale Veröffentlichungsnummer: WO 2024/149634

(56) Entgegenhaltungen:
- US-A1- 2021 009 108
- US-A1- 2021 197 894
- US-A1- 2022 097 684
- US-A1- 2022 135 031
- US-B2- 11 046 307

## Beschreibung

Die Erfindung betrifft ein Verfahren zum Steuern eines Fahrzeugs in einer Fahrsituation. Ferner betrifft die Erfindung ein Fahrerassistenzsystem, ein Fahrzeug und ein Computerprogrammprodukt.

Ein erfahrener Berufskraftfahrer kann bereits aufgrund seiner Erfahrung beurteilen, ob sich ein Fahrzeug stabilitätskritisch verhalten wird. Die von einem geübten Fahrer gewählte Fahrweise ist den gegebenen Randbedingungen anpasst und ermöglicht ein sicheres Steuern des Fahrzeugs. Die zu einer korrekten Beurteilung der gegenwärtigen Situation benötigte Erfahrung, stellt sich allerdings in der Regel erst nach mehreren Praxisjahren ein. Aufgrund dieser Erfahrung schätzt ein geübter Fahrer das Fahrzeugverhalten korrekt ein und steuert das Fahrzeug in einer vorliegenden Fahrsituation sicher.

Ein unerfahrener Fahrer kann hingegen eine korrekte Beurteilung des zu erwartenden Fahrzeugverhaltens nicht oder nur teilweise vornehmen. Auch sogenannte virtuelle Fahrer, die autonome Fahrzeuge steuern oder Teilaufgaben beim Steuern autonomer oder teilautonomer Fahrzeuge übernehmen, können eine korrekte Beurteilung des Stabilitätsverhaltens bisher nicht gewährleisten. Dies birgt das Risiko einer der gegenwärtigen Fahrzeugkonfiguration unangemessenen Fahrweise und in der Folge auch einer erhöhten Unfallgefahr.

Bekannte Stabilitätsregelsysteme stabilisieren Fahrzeuge ausschließlich reaktiv, wenn das Fahrzeug einen als stabil bewerteten Bewegungszustand bereits deutlich verlassen hat. Ein Stabilitätsregelsystem, wie insbesondere eine sogenannte Electronic Stability Control (ESC), greift erst dann stabilisierend in eine Bewegung des Fahrzeugs ein, wenn eine Eingriffsschwelle überschritten ist. Diese Eingriffsschwelle ist aus Sicherheitsgründen hoch gewählt, um Fehleingriffe des Stabilitätsregelsystems sicher zu vermeiden. So löst ein ESC meist erst dann aus, wenn ein Fahrer (menschlich oder virtuell) des Fahrzeugs eine Instabilität bemerkt und diese durch ruckartige Lenkbewegungen auszugleichen versucht. Herkömmliche Stabilitätsregelsysteme haben daher den Nachteil, dass der Fahrer nicht beim Lösen einer für die Fahrsituation zu erfüllenden Fahraufgabe unterstützt wird, die meist darin besteht, das Fahrzeug entlang eines bestimmten Pfads (Sollpfad) zu führen. Im Vergleich zu einer stabilen Fahrt wird durch das späte Eingreifen eines herkömmlichen Stabilitätsregelsystems erheblich mehr Platz benötigt. Zwar regeln herkömmliche Stabilitätsregelsysteme Instabilitäten in der Regel zuverlässig aus, es kommt jedoch üblicherweise zu erheblichen Abweichungen des Fahrzeugs von dem geplanten Pfad. Hieraus resultiert ein Sicherheitsrisiko, insbesondere auch dann, wenn ein ungeübter Fahrer eine Instabilität erst spät erkennt, in der Folge spät versucht die Instabilität auszugleichen und so das Stabilitätsregelsystem erst verspätet auslöst.

Die US2022135031A1 betrifft eine Fahrzeugsteuereinrichtung, ein Fahrzeugsteuerverfahren und ein nichtflüchtiges Speichermedium. Die Fahrzeugsteuervorrichtung umfasst: ein Erfassungsteil, das eine Positionsbeziehung zwischen einem Fahrzeug und einer Spur erfasst; ein Steuerteil, das In-Lane-Fahrsteuerung ausführt, die bewirkt, dass ein in einer Lenkvorrichtung des Fahrzeugs enthaltener Aktuator eine Kraft ausgibt, die bewirkt, dass das Fahrzeug in der Spur innerhalb eines Bereichs fährt, der eine obere Grenze basierend auf der Positionsbeziehung nicht überschreitet; und ein Einstellteil für den oberen Grenzwert, Ändern des oberen Grenzwerts in Reaktion auf eine Eingabe an eine Bedienungsperson, die einen Lenkvorgang akzeptiert, der von einem Insassen des Fahrzeugs ausgeführt wird.

Es besteht daher der Bedarf nach Verfahren zum Steuern eines Fahrzeugs, nach Fahrzeugsteuersystemen, nach Fahrzeugen und/oder nach Computerprogrammprodukten, die ein Früherkennen von Instabilitäten ermöglichen, die vorzugsweise kostengünstig realisierbar sind und/oder eine verbesserte Sicherheit bieten.

In einem ersten Aspekt löst die Erfindung die Aufgabe mittels eines Verfahrens zum Steuern eines Fahrzeugs in einer Fahrsituation, aufweisend: Ermitteln eines Soll-Eigenlenkgradienten des Fahrzeugs für die Fahrsituation; Ermitteln eines Ist-Lenkwinkels des Fahrzeugs in der Fahrsituation; Ermitteln eines Ist-Eigenlenkgradienten des Fahrzeugs in der Fahrsituation basierend auf dem Ist-Lenkwinkel; Ermitteln einer Soll-Ist-Abweichung zwischen dem Soll-Eigenlenkgradienten und dem Ist-Eigenlenkgradienten; Bereitstellen eines ersten Grenzwerts für die Soll-Ist-Abweichung; Früherkennen einer Instabilität des Fahrzeugs, falls die ermittelte Soll-Ist-Abweichung den ersten Grenzwert verletzt; und in Antwort auf das Früherkennen einer Instabilität des Fahrzeugs: Ausführen zumindest eines Fahrdynamikeingriffs unter Verwendung zumindest eines Fahrzeugaktuators des Fahrzeugs, um der Instabilität des Fahrzeugs entgegenzuwirken.

Der Erfindung liegt die Erkenntnis zugrunde, dass der in der Fahrsituation tatsächlich vorliegende Ist-Eigenlenkgradient des Fahrzeugs bei Vorliegen einer Instabilität von einem Soll-Eigenlenkgradienten abweicht. Die Erfindung macht sich diese Erkenntnis zunutze, indem eine Instabilität des Fahrzeugs unter Verwendung zumindest einer Soll-Ist-Abweichung, die aus dem Ist-Eigenlenkgradienten und dem Soll-Eigenlenkgradienten bestimmt wird, erkannt wird. Der Ist-Lenkwinkel kann in der Fahrsituation einfach ermittelt werden. So ermitteln herkömmliche Fahrzeugregelsysteme, die heute in nahezu allen Fahrzeugen vorgesehen sind, den Lenkwinkel meist ohnehin. Das Ermitteln des Lenkwinkels kann daher im Verfahren besonders einfach basierend auf Signalen und/oder Messgrößen erfolgen, die bereits am Fahrzeug verfügbar sind. Das Verfahren kann besonders einfach implementiert werden. Basierend auf dem Ist-Lenkwinkel kann der Ist-Eigenlenkgradient ermittelt werden, wobei bei diesem Ermitteln neben dem Ist-Lenkwinkel vorzugsweise auch weitere Größen des Fahrzeugs und/oder einer Fahrzeugbewegung verwendet werden können. Größen des Fahrzeugs können insbesondere Geometriedaten des Fahrzeugs, wie beispielsweise ein Radstand des Fahrzeugs, sein. Größen der Fahrzeugbewegung sind vorzugsweise ein befahrener Kurvenradius und/oder eine gemessene Querbeschleunigung.

Eine Fahrsituation ist eine objektive und daher nicht subjektiv vom Fahrer wahrgenommene Beschreibung einer Situation des Nutzfahrzeugs. Die Fahrsituation kann beispielsweise eine Kurvenfahrt des Nutzfahrzeugs durch eine Kurve oder ein Ausweichmanöver sein. Die Fahrsituation ist vorzugsweise eine Situation in der sich eine Querdynamik des Fahrzeugs ändert. Die Fahrsituation kann aber auch eine Geradeausfahrt des Fahrzeugs umfassen, wobei dann der Ist-Eigenlenkgradient und der Soll-Eigenlenkgradient in der Regel gleich null sind und die Soll-Ist-Abweichung ebenfalls gleich null ist. Durch das auf dem Ist-Eigenlenkgradienten und dem Soll-Eigenlenkgradienten basierende Früherkennen können Instabilitäten an Hand von Größen der aktuellen Fahrzeugbewegung erkannt werden. Ein Erfassen einer Fahrzeugposition und/oder eine Umweltüberwachung sind nicht notwendig, können aber zusätzlich vorgesehen sein.

Das Eigenlenkverhalten beschreibt von einem Fahrereinfluss unabhängige Lenkeigenschaften des Fahrzeugs. Der Eigenlenkgradient gibt an, ob der Lenkwinkel bei zunehmender Querbeschleunigung vergrößert oder verkleinert werden muss, um den glpeichen Kurvenradius fahren zu können. Im Rahmen der vorliegenden Erfindung ist der Eigenlenkgradient die Differenz zwischen einem Lenkwinkelgradienten bezüglich der Querbeschleunigung und einem Gradienten des Ackermannwinkels bezüglich der Querbeschleunigung. Der Ackermannwinkel ist der Quotient aus einem Radstand des Fahrzeugs zu einem Radius einer befahrenen Bahnkurve, wobei der Radstand der Dividend und der Radius der Divisor ist. Der Eigenlenkgradient (EG) kann durch die folgende Formel ausgedrückt werden, in der a_{y} die Querbeschleunigung, δ den Lenkwinkel und δ_{A} den Solllenkwinkel bezeichnet: $EG = \frac{dδ}{{da}_{y}} - \frac{{dδ}_{A}}{{da}_{y}}$

Im linearen Bereich kann auch der folgende Zusammenhang verwendet werden, wobei R den Radius der Bahnkurve und I den Radstand des Fahrzeugs bezeichnet: $δ = \frac{l}{R} + EG \times {a}_{y}$

Für den Soll-Eigenlenkgradienten ist der Lenkwinkel gleich einem Soll-Lenkwinkel und für den Ist-Eigenlenkgradient ist der betrachtete Lenkwinkel der Ist-Lenkwinkel. Das Verhalten von Fahrzeugen lässt sich unterscheiden in untersteuernd, neutral und übersteuernd. Beim Untersteuern hat der Eigenlenkgradient einen Wert größer null. Es muss also bei einer bestimmten Querbeschleunigung ein Lenkwinkel ausgesteuert werden, der größer ist als der Ackermannwinkel. Beim Übersteuern ist der Eigenlenkgradient hingegen kleiner null. Es soll verstanden werden, dass der Ist-Eigenlenkgradient beim Ermitteln nicht zwingend unter Verwendung der vorstehenden Formel berechnet werden muss. Insbesondere kann das Verfahren auch ohne Kenntnis des Radius der befahrenen Bahnkurve und/oder ohne Kenntnis des Radstands durchgeführt werden. Der Eigenlenkgradient muss im Verfahren auch nicht als Absolutwert ermittelt werden. So kann der Ist-Eigenlenkgradient vorzugsweise auch in Relation zum Radius der befahrenen Bahnkurve bestimmt werden. Da der Radius beim Ermitteln des Ist-Eigenlenkgradienten und des Soll-Eigenlenkgradienten im Wesentlichen identisch ist, kann die Soll-Ist-Abweichung auch ohne Kenntnis des Radius ermittelt werden. So können beispielsweise der Ist-Eigenlenkgradient und der Soll-Eigenlenkgradient jeweils relativ zum Radius bzw. als Funktion des Radius ermittelt werden. Der Radius geht in solche Funktionen identisch ein, sodass dessen Kenntnis zum Ermitteln der Soll-Ist-Abweichung nicht notwendig ist.

Das Früherkennen einer Instabilität des Nutzfahrzeugs betrifft insbesondere eine Fähigkeit, mittels des Verfahrens eine Instabilität des Nutzfahrzeugs früher zu erkennen als dies mit herkömmlichen Stabilitätsregelsystem möglich ist. Herkömmliche Stabilitätsregelsysteme, häufig als Electronic Stability Control (ESC) bezeichnet, sind reaktive System, die erst dann aktiviert werden, wenn ein Bewegungszustand des Nutzfahrzeugs als instabil erkannt wird. Aufgrund von Fehlertoleranzen, die aus Sicherheitsgründen nicht zu klein gewählt werden können, und der beschränkten Eignung der zur Verfügung stehenden Signale zur Erkennung von Instabilitäten reagieren herkömmliche Stabilitätsregelsysteme vergleichsweise spät, sodass Positionsabweichungen zwischen der intendierten Trajektorie und der realen Trajektorie groß sind.

Der Fahrdynamikeingriff erfolgt vorzugsweise zum Stabilisieren des Nutzfahrzeugs. Das erfindungsgemäße Verfahren verfolgt den Zweck, eine Genauigkeit zu verbessern, mit der das Fahrzeug einem vom Fahrer intendierten Pfad folgt. Eine Trajektorie kann diesen Pfad umfassen, den beispielsweise ein menschlicher Fahrer mit dem Nutzfahrzeug befahren möchte. Alternativ kann die Trajektorie auch eine von einem virtuellen Fahrer eines (teil-)autonomen Fahrzeugs geplante Trajektorie des Nutzfahrzeugs sein. Die Trajektorie kann auf einen zu befahrenden Pfad beschränkt sein oder vorzugsweise auch weitere Informationen, wie beispielsweise eine Fahrzeuggeschwindigkeit beim Befahren des Pfades aufweisen. Im Falle eines menschlichen Fahrers kann mittels des erfindungsgemäßen Verfahrens insbesondere dann die Positionsgenauigkeit des Nutzfahrzeugs verbessert werden, wenn sich aufgrund verschiedener Einflüsse auf das Fahrzeug nicht das vom Fahrer intendierte Fahrverhalten einstellt und das Nutzfahrzeug daher auch nicht der intendierten Trajektorie folgt. Beispielsweise kann eine Neigung des Fahrzeugs zum Untersteuern aufgrund falscher Beladung des Fahrzeugs in der gegenwärtigen Fahrzeugkonfiguration gegenüber einem gewohnten Fahrverhalten stark erhöht sein, sodass ein vom Fahrer vorgegebener Lenkwinkel nicht ausreicht, um die intendierte Trajektorie zu befahren. Das Verfahren kann die Trajektorientreue dahingehend verbessern, dass das Fahrzeug trotz solch einer nicht optimalen Lenkvorgabe des Fahrers der vom Fahrer intendierten Trajektorie im Wesentlichen folgt.

Gemäß einer ersten bevorzugten Ausführungsform weist das Ermitteln des Soll-Eigenlenkgradienten des Fahrzeugs für die Fahrsituation auf: Ermitteln von Fahrdaten zumindest einer analogen Fahrsituation und Ermitteln des Soll-Eigenlenkgradienten aus den Fahrdaten. Eine analoge Fahrsituation des Nutzfahrzeugs ist eine Fahrsituation, die mit der gegenwärtigen Fahrsituation zumindest in der Fahrzeuggeschwindigkeit und in dem Ist-Lenkwinkel übereinstimmt. Bevorzugt kann die analoge Fahrsituation auch bezüglich weiterer Aspekte mit der gegenwärtigen Fahrsituation übereinstimmen. Beispielsweise und bevorzugt können die analoge Fahrsituation und die Fahrsituation bezüglich einer Umgebungstemperatur, Witterungsverhältnissen, Niederschlagsverhältnissen, einer Fahrbahnneigung und/oder einer Oberflächenbeschaffenheit einer Fahrbahn übereinstimmen. Die analoge Fahrsituation ist eine Fahrsituation, in der das dynamische Fahrzeugverhalten im Wesentlichen identisch zur gegenwärtigen Fahrsituation sein sollte. Insbesondere, wenn mehrere analoge Fahrsituationen betrachtet werden, kann aus den historischen Fahrdaten ein in der gegenwärtigen Fahrsituation zu erwartendes Fahrverhalten des Nutzfahrzeugs gelernt werden. Dieses zu erwartenden Fahrverhalten wird durch die Soll-Größe repräsentiert. Wenn das Ist-Fahrverhalten, das durch die Ist-Größe repräsentiert wird, von diesem gelernten Fahrverhalten abweicht, dann ist dies ein Indikator für ein instabiles Verhalten des Nutzfahrzeugs. Beispielsweise kann für eine analoge Fahrsituation, die als stabil bewertet wird, ein Eigenlenkgradient ermittelt werden. Dieser Eigenlenkgradient der analogen Fahrsituation kann dann als Soll-Eigenlenkgradient für die zu bewertende Fahrsituation verwendet werden. Es soll verstanden werden, dass das Ermitteln von Fahrdaten nicht bei jedem Früherkennen gesondert durchgeführt werden muss. So kann der Soll-Eigenlenkgradient auch aus einer Mehrzahl vorgespeicherter Soll-Eigenlenkgradienten ausgewählt werden. Bei der Auswahl wird ein Eigenlenkgradient als Soll-Eigenlenkgradient ausgewählt, der für eine Fahrsituation ermittelt wurde, die zur Fahrsituation, für die das Frühermitteln durchgeführt wird, analog ist. Das Ermitteln von Fahrdaten zumindest einer analogen Fahrsituation kann auch entfallen.

In einer bevorzugten Weiterbildung weist das Verfahren ferner auf: Ermitteln einer Gierrate des Fahrzeugs in der Fahrsituation und/oder Erfassen einer Querbeschleunigung des Fahrzeugs in der Fahrsituation; wobei das Ermitteln eines Ist-Eigenlenkgradienten des Fahrzeugs in der Fahrsituation basierend auf dem Ist-Lenkwinkel zusätzlich unter Verwendung der ermittelten Gierrate und/oder zusätzlich unter Verwendung der ermittelten Querbeschleunigung erfolgt. Beim Ermitteln des Ist-Eigenlenkgradienten können neben dem Ist-Lenkwinkel also nur die ermittelte Gierrate oder nur die ermittelte Querbeschleunigung berücksichtigt werden. Vorzugsweise erfolgt das Ermitteln aber basierend auf dem Ist-Lenkwinkel, der ermittelten Gierrate und der ermittelten Querbeschleunigung.

Bevorzugt weist das Verfahren ferner auf: Ermitteln zumindest einer geometrischen Charakteristik einer gegenwärtigen Fahrzeugkonfiguration des Fahrzeugs; wobei das Ermitteln eines Ist-Eigenlenkgradienten des Fahrzeugs in der Fahrsituation basierend auf dem Ist-Lenkwinkel zusätzlich unter Verwendung der geometrischen Charakteristik des Fahrzeugs erfolgt. Die geometrische Charakteristik ist insbesondere eine die Fahrdynamik des Fahrzeugs definierende Geometriegröße, wie vorzugsweise ein Radstand des Fahrzeugs, ein Achsabstand zwischen Achsen des Fahrzeugs, eine Spurbreite des Fahrzeugs, ein Abstand zwischen einer Hinterachse des Fahrzeugs und einem Kupplungspunkt eines Anhängers und/oder eine Konstruktionsform eines Anhängerfahrzeugs (beispielsweise Deichselanhänger oder Zentralachsanhänger). Auch eine Konstruktionsform des Anhängerfahrzeugs kann mittels einer geometrischen Charakteristika berücksichtigt bzw. repräsentiert werden.

In einer Variante kompensiert der Fahrdynamikeingriff die Instabilität zumindest teilweise. In diesem Fall kann das Verfahren vorzugsweise so durchgeführt werden, dass der Fahrer den Fahrdynamikeingriff nicht wahrnimmt. So kann der benötigte Lenkwinkel bzw. die vom Fahrer zu verrichtende Lenkarbeit reduziert werden. Das Fahrverhalten des Fahrzeugs kann einem Fahrer dann besonders sicher erscheinen. Wenn der Fahrdynamikeingriff die Instabilität zumindest teilweise kompensiert, dann wird das Steuerverhalten des Fahrzeugs einem neutralen Steuerverhalten, das einen Eigenlenkgradienten mit einem Wert von null aufweist, angenähert. Es kann aber beispielsweise auch ausreichen, dass sich das Fahrzeug in Folge des Fahrdynamikeingriffs im Wesentlichen so verhält, wie es ein Fahrer des Fahrzeugs gewohnt ist. Vorzugsweise kann vorgesehen sein, dass der Fahrdynamikeingriff zusätzlich eine Positionsabweichung des Fahrzeugs von einem intendierten Pfad (Soll-Pfad) zumindest teilweise kompensiert. Das Risiko von Kollisionen des Fahrzeugs mit neben dem Pfad befindlichen Objekten ist reduziert. Der Fahrdynamikeingriff verbessert die Sicherheit des Fahrzeugs also vorzugsweise nicht nur in dem der Instabilität entgegengewirkt wird, sondern auch dadurch, dass eine Positionstreue des Fahrzeugs verbessert wird. Es kann dabei vorgesehen sein, dass derselbe Fahrdynamikeingriff sowohl die Positionsabweichung kompensiert als auch der Instabilität entgegenwirkt.

Vorzugsweise umfasst das Verfahren ferner ein Beenden des Fahrdynamikeingriffs, falls die Soll-Ist-Abweichung eine Toleranzgrenze erreicht oder unterschreitet. Der Fahrdynamikeingriff wird in der bevorzugten Ausgestaltung dann beendet, wenn sich die Soll-Ist-Abweichung soweit reduziert hat, dass der Ist-Eigenlenkgradient innerhalb eines Toleranzbereichs, dessen Breite durch die Toleranzgrenze bestimmt wird, um den Soll-Eigenlenkgradienten liegt. Alternativ oder ergänzend kann der Fahrdynamikeingriff auch dann beendet werden, wenn die Positionsabweichung des Fahrzeugs vom intendierten Pfad eine Positionstoleranzgrenze erreicht oder unterschreitet.

In einer bevorzugten Ausführungsform des Verfahrens weist das Bereitstellen eines ersten Grenzwerts für die Soll-Ist-Abweichung auf: Ermitteln zumindest einer Lastcharakteristik der gegenwärtigen Fahrzeugkonfiguration; und Definieren des ersten Grenzwerts für die Soll-Ist-Abweichung unter Verwendung der ermittelten Lastcharakteristik. Ferner bevorzugt umfasst das Bereitstellen ferner ein Ermitteln zumindest einer geometrischen Charakteristik der gegenwärtigen Fahrzeugkonfiguration; und Definieren des ersten Grenzwerts für die Soll-Ist-Abweichung zusätzlich unter Verwendung der ermittelten geometrischen Charakteristik. In der bevorzugten Weiterbildung macht sich die Erfindung die Erkenntnis zunutze, dass das querdynamische Stabilitätsverhalten des Fahrzeugs erheblich von der gegenwärtigen Fahrzeugkonfiguration beeinflusst wird. Neben geometrischen Charakteristika haben auch Lastcharakteristika einen bedeutenden Einfluss auf das Stabilitätsverhalten des Fahrzeugs. Die Lastcharakteristik repräsentiert zumindest teilweise auf das Fahrzeug wirkende Lasten, die beispielsweise aus dem Eigengewicht des Fahrzeugs und aus einer Ladung des Fahrzeugs resultieren können. So ist eine gegenwärtige Fahrzeugkonfiguration eines unbeladenen Fahrzeugs verschieden von einer gegenwärtigen Fahrzeugkonfiguration desselben Fahrzeugs im beladenen Zustand. Eine Lastcharakteristik kann vorzugsweise eine Radlast, eine Achslast, eine Fahrzeuggesamtmasse, eine Masse eines Fahrzeugteils und/oder eine Schwerpunktlage des Fahrzeugs oder eines Fahrzeugteils sein oder umfassen. Ferner bevorzugt können die Lastcharakteristika auch Daten umfassen, die eine Radlast, eine Achslast, eine Fahrzeuggesamtmasse und/oder eine Masse eines Fahrzeugteils repräsentieren. Durch das Definieren des ersten Grenzwerts unter Verwendung der Lastcharakteristik, kann die gegenwärtige Fahrzeugkonfiguration berücksichtigt werden. So kann der erste Grenzwert beispielsweise dann vergleichsweise klein bzw. eng definiert werden, wenn die Lastcharakteristik ein hecklastig beladendes Fahrzeug repräsentiert, das im Vergleich zu einem zentral beladenen Fahrzeug in der Regel schneller zu Instabilitäten neigt.

Vorzugsweise ist der Fahrdynamikeingriff ein Bremseingriff an einer oder mehreren Bremsen des Fahrzeugs, eine Motormomentenlimitierung eines Motors des Fahrzeugs, ein Bereitstellen asymmetrischer Antriebsmomente an Rädern des Fahrzeugs und/oder ein Bereitstellen eines unterstützenden Lenkmoments mittels einer lenkbaren Zusatzachse des Fahrzeugs ist. Vorzugsweise wird der Fahrdynamikeingriff unter Verwendung eines Fahrzeugaktuators ausgeführt, der von einer Lenkung des Fahrzeugs, an der der Ist-Lenkwinkel in der Fahrsituation eingestellt wird, verschieden ist.

In einer bevorzugten Variante wird beim Früherkennen einer Instabilität des Fahrzeugs ermittelt, ob die Instabilität ein Untersteuern des Fahrzeugs oder ein Übersteuern des Fahrzeugs in der Fahrsituation ist. Vorzugsweise ist der Fahrdynamikeingriff ein Bremseingriff an einem oder mehreren kurveninneren Rädern des Fahrzeugs, falls die Instabilität ein Untersteuern ist, und ein Bremseingriff an einem kurvenäußeren Rad, insbesondere kurvenäußeren Vorderrad, falls die Instabilität ein Übersteuern ist. Ein Untersteuern kann dann erkannt werden, falls der ermittelte Ist-Eigenlenkgradient positiv ist, und ein Übersteuern kann erkannt werden, falls der ermittelte Ist-Eigenlenkgradient negativ ist. Es kann auch vorgesehen sein, dass ein Untersteuern dann erkannt wird, falls der ermittelte Ist-Eigenlenkgradient einen vordefinierten Richtwert überschreitet. Analog kann ein Übersteuern erkannt werden, falls der ermittelte Ist-Eigenlenkgradient den vordefinierten Richtwert unterschreitet. Dies ist insbesondere wünschenswert, da moderne Fahrzeuge in der Regel untersteuernd ausgelegt und ein Richtwert des Eigenlenkgradienten dann in der Regel größer null ist.

Vorzugsweise umfasst das Verfahren ferner: Ermitteln einer Lenkoszillation unter Verwendung eines Zeitverlaufs des Ist-Lenkwinkels; und in Antwort auf das Ermitteln einer Lenkoszillation: Herabsetzen des ersten Grenzwerts, falls eine Lenkoszillation ermittelt wird, die in einem Eigenfrequenzband des Fahrzeugs liegt. Bevorzugt umfasst das Verfahren ein Ermitteln des Eigenfrequenzbands, das besonders bevorzugt basierend auf einem Fahrzeugmodell des Fahrzeugs erfolgt. In Fällen in denen am Fahrzeug eine Lenkoszillation vorliegt, die innerhalb eines Eigenfrequenzbands um eine Eigenfrequenz des Fahrzeugs liegt, besteht die Gefahr, dass die Lenkoszillation bzw. die dadurch bedingte Anregung des Fahrzeugs zu einer Resonanz des Fahrzeugs führt. In diesem Fall ist es vorteilhaft, den ersten Grenzwert herabzusetzen bzw. den Grenzwert zu reduzieren. Durch das Herabsetzen des ersten Grenzwerts führen bereits geringere Soll-Ist-Abweichungen zu einem Früherkennen der Instabilität. So kann eine Instabilität bei herabgesetztem erstem Grenzwert beispielsweise bereits bei einer Soll-Ist-Abweichung von bis zu 0,003 erkannt werden, wohingegen erst eine Soll-Ist-Abweichung mit einem Wert von 0,006 zu einem Früherkennen einer Instabilität führt, wenn keine Lenkoszillation ermittelt wird oder die ermittelte Lenkoszillation nicht im Eigenfrequenzband des Fahrzeugs liegt.

Gemäß einer bevorzugten Weiterbildung weist das Verfahren auf: Ermitteln eines Ist-Knickwinkels zwischen einem Zugfahrzeug und einem Anhängerfahrzeug des Fahrzeugs; Ermitteln eines Soll-Knickwinkels für die Fahrsituation; und Herabsetzen des ersten Grenzwerts, falls der Ist-Knickwinkel den Soll-Knickwinkel um einen Knickwinkeltoleranzwert überschreitet. Das Ermitteln eines Soll-Knickwinkels erfolgt vorzugsweise unter Verwendung eines Fahrzeugmodells, insbesondere eines Einspurmodells des Fahrzeugs. Das Fahrzeugmodell kann eine oder mehrere Lastcharakteristika und eine oder mehrere geometrische Charakteristika des Fahrzeugs umfassen. Ein Ist-Knickwinkel, der den Soll-Knickwinkel für eine Fahrsituation überschreitet, ist ein starkes Indiz für eine Instabilität des Anhängerfahrzeugs. Beispielsweise kann unter Verwendung des Knickwinkels ein Aufschieben des Anhängerfahrzeugs, das englisch auch als jack knifing umschrieben wird, oder ein Ausbrechen des Anhängers ermittelt werden. Beides sind sehr kritische und gefährliche Situation, die frühzeitig durch Ermitteln des Ist-Knickwinkels erkannt werden können, der vorzugsweise permanent mit dem Soll-Knickwinkel, der bevorzugt basierend auf einer Modellrechnung ermittelt wird, verglichen wird. Ist das Anhängerfahrzeug in einer solchen Fahrsituation beispielsweise leer und das Zugfahrzeug beladen, ist es sehr wahrscheinlich, dass der Fahrer des Zugfahrzeug nichts davon bemerkt, weil das Zugfahrzeug vollkommen stabil bleibt. In der bevorzugten Weiterbildung kann eine Sicherheit des Verfahrens verbessert werden, da bereits verhältnismäßig kleinere Soll-Ist-Abweichungen zu einem Früherkennen einer Instabilität führen.

Vorzugsweise weist das Verfahren ferner auf: Ermitteln einer gegenwärtigen Fahrzeuggeschwindigkeit des Fahrzeugs in der Fahrsituation, wobei das Bereitstellen eines ersten Grenzwerts für die Soll-Ist-Abweichung ein Definieren des ersten Grenzwerts zumindest unter Verwendung der ermittelten Fahrzeuggeschwindigkeit umfasst, wobei der erste Grenzwert vorzugsweise indirekt proportional bzw. umgekehrt proportional zur Fahrzeuggeschwindigkeit ist. Bei hohen Fahrzeuggeschwindigkeiten führen Instabilitäten innerhalb kurzer Zeit zu erheblichen Abweichungen der Fahrzeugposition, sodass Instabilitäten insbesondere bei hohen Fahrzeuggeschwindigkeiten frühzeitig erkannt werden sollten. Durch das Definieren des ersten Grenzwerts unter Verwendung der ermittelten Fahrzeuggeschwindigkeit kann das Früherkennen verbessert sein. Es kann aber beispielsweise auch vorgesehen sein, dass das Früherkennen erst erfolgt, wenn das Fahrzeug sich mit einer bestimmten Mindestgeschwindigkeit bewegt.

**In** einem zweiten Aspekt löst die Erfindung die eingangs genannte Aufgabe mit einem Fahrerassistenzsystem zum Verbessern einer Trajektorientreue eines Fahrzeugs, das dazu ausgebildet ist, das Verfahren gemäß dem ersten Aspekt der Erfindung auszuführen. Vorzugsweise umfasst das Fahrerassistenzsystem eine Steuereinheit. Ferner bevorzugt umfasst das Fahrerassistenzsystem eine Schnittstelle, die mit einem Fahrzeugnetzwerk des Fahrzeugs verbunden werden kann. Die Schnittstelle ist vorzugsweise zum Empfangen von Fahrzeugsignalen ausgebildet, welche zumindest die Lastcharakteristik, die Trajektorie, den Soll-Eigenlenkgradient, die Fahrzeuggeschwindigkeit und/oder den Lenkwinkel-Istwert repräsentieren. Es soll verstanden werden, dass einer oder mehrere der Ermittlungsschritte des Verfahrens von dem Fahrerassistenzsystem basierend auf solchen Fahrzeugsignalen durchgeführt werden kann. Das Fahrerassistenzsystem muss also die Lastcharakteristik nicht unmittelbar selbst ermitteln, sondern kann diese auch basierend auf Lastsignalen ermitteln, die beispielsweise von einem Luftfedersystem des Fahrzeugs auf dem Fahrzeugnetzwerk bereitgestellt werden.

In einem dritten Aspekt löst die Erfindung die eingangs genannte Aufgabe durch ein Fahrzeug mit zumindest einem Fahrzeugaktuator und einem Fahrerassistenzsystem gemäß dem zweiten Aspekt der Erfindung. Vorzugsweise umfasst das Fahrzeug zumindest zwei Achsen und/oder eine Lenkung.

Gemäß einem vierten Aspekt der Erfindung wird die eingangs genannte Aufgabe mittels eines Computerprogrammprodukts gelöst, das Programmcode-Mittel aufweist, die auf einem computerlesbaren Datenträger gespeichert sind, um das Verfahren gemäß dem ersten Aspekt der Erfindung auszuführen, wenn das Computerprogrammprodukt auf einer Recheneinheit, insbesondere der Steuereinheit des Fahrerassistenzsystems gemäß dem zweiten Aspekt der Erfindung, ausgeführt wird.

Es soll verstanden werden, dass das Fahrerassistenzsystem gemäß dem zweiten Aspekt der Erfindung, das Fahrzeug gemäß dem dritten Aspekt der Erfindung und das Computerprogrammprodukt gemäß dem vierten Aspekt der Erfindung gleiche und ähnliche Unteraspekte aufweisen, wie sie insbesondere in den abhängigen Ansprüchen zum Verfahren gemäß dem ersten Aspekt der Erfindung niedergelegt sind.

Ausführungsformen der Erfindung werden nun nachfolgend anhand der Zeichnungen beschrieben.

Weitere Vorteile, Merkmale und Einzelheiten der Erfindung ergeben sich aus der nachfolgenden Beschreibung der bevorzugten Ausführungsformen sowie anhand der Zeichnungen, diese zeigen in:
- Fig. 1: eine Draufsicht auf ein schematisch dargestelltes Fahrzeug;
- Fig. 2a: eine als Kurvenfahrt illustrierte Fahrsituation des Fahrzeugs gemäß Fig. 1, wobei das Fahrzeug untersteuert;
- Fig. 2b: eine als Kurvenfahrt illustrierte Fahrsituation des Fahrzeugs gemäß Fig. 1, wobei das Fahrzeug übersteuert;
- Fig. 3: ein schematisches Ablaufdiagramm eines Verfahrens zum Steuern des Fahrzeugs;
- Fig. 4: ein Diagramm, das für eine Fahrsituation einen Verlauf eines Ist-Eigenlenkgradienten, eines Soll-Eigenlenkgradienten, eines Ist-Lenkwinkels und einer Querbeschleunigung des Fahrzeugs illustriert; und in
- Fig. 5: ein Diagramm, das für eine Fahrsituation einen Verlauf eines Ist-Lenkwinkels, der bei Vorliegen eines Fahrdynamikeingriffs am Fahrzeug vorgegeben werden muss, und einen Referenzverlauf des Ist-Lenkwinkels ohne Fahrdynamikeingriff illustriert.

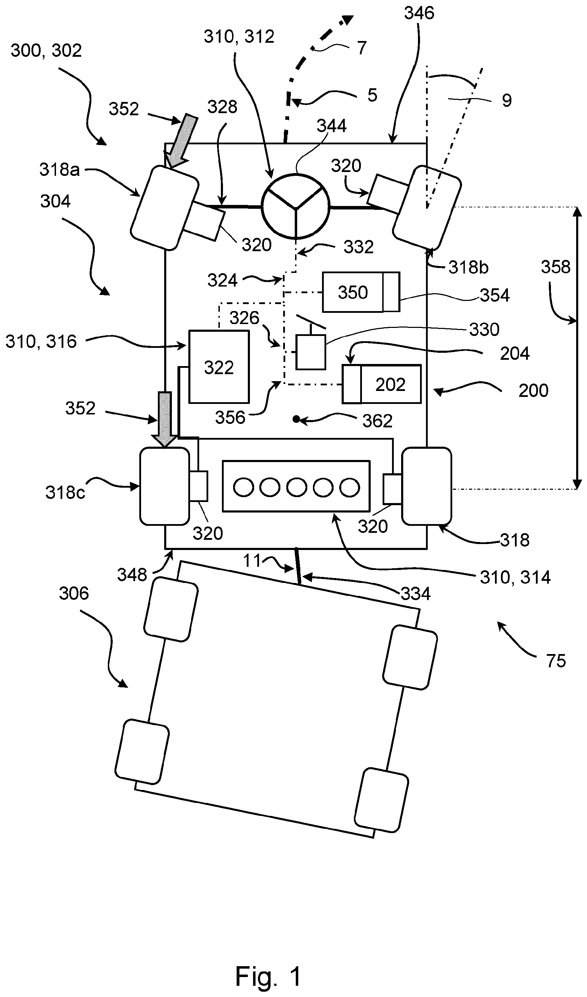

Fig. 1 zeigt ein Fahrzeug 300, das hier als Fahrzeugzug 302 ausgebildet ist. Der Fahrzeugzug 302, der ein Nutzfahrzeug ist, umfasst ein Zugfahrzeug 304, das ein Anhängerfahrzeug 306 zieht. Das Fahrzeug 300 umfasst als Fahrzeugaktuatoren 310 eine elektronisch steuerbare Lenkung 312, einen Antriebsmotor 314 und ein Bremssystem 316. Alternativ zu einer elektronisch steuerbaren Lenkung 312 kann auch eine herkömmliche Lenkung vorgesehen sein, die einen Lenkwinkelsensor aufweist. Das Bremssystem 316 ist zum Verzögern von Rädern 318 des Fahrzeugs 300 vorgesehen. Hierfür weist das Bremssystem 316 den Rädern 318 zugeordnete Bremsaktuatoren 320 auf. Die Bremsaktuatoren 320 sind Subaktuatoren des von dem Bremssystem 316 gebildeten Fahrzeugaktuators 310 und sind dazu ausgebildet, einen Bremsschlupf an einem oder mehreren der Räder 318 auszusteuern. Dieser Bremsschlupf korrespondiert zu einem an den Bremsaktuatoren 320 bereitgestellten Bremsdruck, der von einem Bremsmodulator 322 des Bremssystems 316 bereitgestellt wird. Im gezeigten Ausführungsbeispiel ist das Bremssystem 316 ein teilelektronisches Bremssystem 316, das dazu ausgebildet ist, elektrische Bremssignale 326 zu empfangen und die Räder 318 des Fahrzeugs 300 entsprechend der Bremssignale 326 zu bremsen bzw. mittels der Bremsaktuatoren 320 an den Rädern 318 einen Bremsschlupf auszusteuern. Zum Empfangen der Bremssignale 326 ist der Bremsmodulator 322 hier mit einem Fahrzeugnetzwerk 324 verbunden. Das Fahrzeugnetzwerk 324 ist in dem gezeigten Ausführungsbeispiel ein CAN-Bus des Fahrzeugs 300, insbesondere ein ISO 11992 CAN-Bus. Die Bremssignale 326 werden von einem elektronischen Fußbremsmodul 330 des Fahrzeugs 300 auf dem Fahrzeugnetzwerk 324 bereitgestellt. Durch Drücken des elektronischen Fußbremsmoduls 330 kann ein menschlicher Fahrer des Fahrzeugs 300 eine Bremsung des Fahrzeugs 300 anfordern, wobei der basierend auf den Bremssignalen 326 ausgesteuerte Bremsdruck zu einem Stellweg des elektronischen Fußbremsmoduls 330 korrespondiert. Es soll verstanden werden, dass die für die verschiedenen Räder 318 bereitgestellten Bremsdrücke variieren können. Ein Bremsdruck an einem linken Vorderrad 318a einer Vorderachse 328 des Fahrzeugs 300, kann also zu einem Bremsdruck verschieden sein, der an dem Bremsaktuator 320 bereitgestellt wird, der einem rechten Vorderrad 318b des Fahrzeugs 300 zugeordnet ist. Ferner ist das Bremssystem 316 auch zum Verzögern des Anhängerfahrzeugs 306 vorgesehen, wobei in Fig. 1 nur Bremsaktuatoren 320 des Zugfahrzeugs 304 dargestellt sind.

Der Fahrer des Fahrzeugs 300 steuert das Fahrzeug 300 in einer regulären Fahrsituation entlang eines intendierten Pfads 5. Hierfür steuert der Fahrer den Antriebsmotor 314, das Bremssystem 316 und die elektronisch steuerbare Lenkung 312 derart an, dass das Fahrzeug 300 dem intendierten Pfad 5 möglichst exakt mit einer Soll-Geschwindigkeit 7 folgt, wobei die Soll-Geschwindigkeit 7 entlang des Pfads 5 variieren kann bzw. ein Geschwindigkeitsprofil darstellen kann. Das Fahrzeugnetzwerk 324 verbindet neben dem Bremssystem 316 und dem Fußbremsmodul 330 auch die elektronisch steuerbare Lenkung 312 und ein in Fig. 1 nicht dargestelltes Motorsteuergerät des Antriebsmotors 314 miteinander. Zum Steuern des Fahrzeugs 300 stellt der Fahrer mittels der elektronisch steuerbaren Lenkung 312 einen Ist-Lenkwinkel 9 an den gelenkten Rädern des Fahrzeugs 300, die hier die Vorderräder 318a, 318b des Fahrzeugs 300 sind, ein. Hierfür gibt der Fahrer an einem Lenkrad 344 der Lenkung 312 einen Lenkradwinkel vor, der dann von einem Lenkradsensor erfasst wird. Der Lenkradsensor stellt zum Lenkradwinkel korrespondierende Lenksignale 332 an einem Stellmotor der Lenkung 312 bereit, der wiederrum an einer Lenksäule ein zu den Lenksignalen 332 bzw. zum Lenkradwinkel korrespondierendes Lenkmoment bereitstellt. Die Lenksäule wird gedreht und an den Rädern wird über ein Lenkgetriebe und Spurstangen ein Ist-Lenkwinkel 9 ausgesteuert, der zu Lenkradwinkel korrespondiert. Aus Übersichtsgründen sind der Lenkradsensor, der Stellmotor, das Lenkgetriebe und die Spurstangen in Fig. 1 nicht dargestellt. Die Lenkung 312 stellt die Lenksignale 332 ferner auf dem Fahrzeugnetzwerk 324.

Das Zugfahrzeug 304 und das Anhängerfahrzeug 306 sind mittels einer Deichsel 334 verbunden, wobei das Anhängerfahrzeug 306 hier keinen eigenen Antrieb umfasst und von dem Zugfahrzeug 304 gezogen wird. Das Anhängerfahrzeug 306 folgt dem Zugfahrzeug 304, wobei sich zwischen dem Zugfahrzeug 304 und dem Anhängerfahrzeug 306 ein Ist-Knickwinkel 11 einstellt. Bei stationärer Fahrt in gerader Richtung, hat der Ist-Knickwinkel 11 einen Wert von 0°, da das Anhängerfahrzeug 306 gerade hinter dem Zugfahrzeug 304 herfährt.

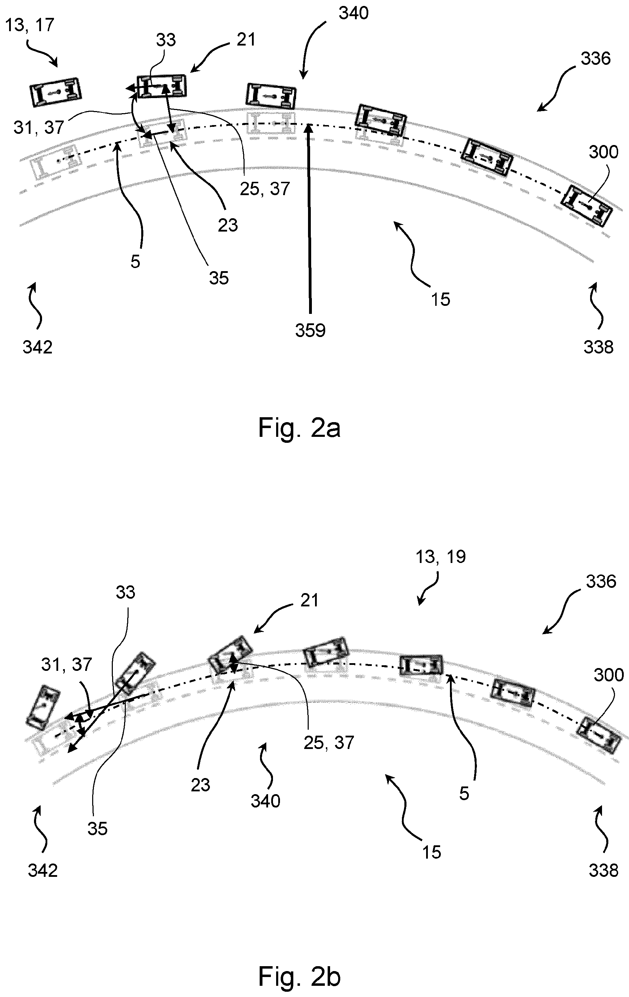

Im vorliegenden Ausführungsbeispiel steuert in einem regulären Fahrbetrieb allein der menschliche Fahrer das in Fig. 1 gezeigte Fahrzeug 300. Es kann jedoch auch vorgesehen sein, dass das Fahrzeug ein autonomes Fahrzeug ist, das zumindest teilweise von einer autonomen Einheit, die auch als virtueller Fahrer bezeichnet wird, steuerbar ist. In bestimmten Fahrsituationen kann es dazu kommen, dass das Fahrzeug 300 instabil wird und nicht das vom Fahrer angenommene Fahrverhalten zeigt. Dies ist häufig der Fall, wenn das Fahrzeug 300 ungünstig beladen ist. Eine ungünstige Beladung liegt beispielsweise dann vor, wenn das Anhängerfahrzeug 306 voll beladen ist, während das Zugfahrzeug 304 leer ist. In diesem Fall neigt das Fahrzeug 300 zu Instabilitäten, da das Anhängerfahrzeug 306 das Zugfahrzeug 304 von hinten schieben kann. Ferner kann eine Abweichung zwischen dem angenommenen Fahrverhalten und einem realen Fahrverhalten beispielsweise dann vorliegen, wenn eine Beladungssituation eines als Sattelauflieger ausgebildeten Anhängerfahrzeugs 306 zu einer erhöhten Hinterachslast eines als Sattelzugmaschine ausgebildeten Zugfahrzeugs 304 führt und so ein untersteuerndes Fahrverhalten hervorruft. Ferner können schlechte Straßenverhältnisse, wie beispielsweise Straßenglätte oder reduzierte Reibung zwischen Rädern 318 des Fahrzeugs 300 und einer Fahrbahn 334 (vgl. Fig. 2a, 2b) aufgrund einer Ölspur, Sand oder Rollsplitt, dazu führen, dass das Fahrzeug 300 dem intendierten Pfad 5 nicht folgen kann.

Zwei Arten von Instabilitäten 13, die sich in einer Fahrsituation 15 einstellen können, sind ein Untersteuern 17 und ein Übersteuern 19 des Fahrzeugs 300. Fig. 2a und Fig. 2b illustrieren die Fahrsituation 15 als eine Kurvenfahrt des Fahrzeugs 300, wobei zur Vereinfachung nur das Zugfahrzeug 304 dargestellt ist. Fig. 2a zeigt ein Untersteuern 17 des Fahrzeugs 300, während Fig. 2b ein Übersteuern 19 des Fahrzeugs 300 illustriert. Die Instabilität 13 (das Untersteuern 17 bzw. das Übersteuern 19) ist in Fig. 2a und Fig. 2b jeweils einem stabilen Fahrzustand, in dem das Fahrzeug 300 dem vom Fahrer intendierten Pfad 5 ideal folgt, überlagert. Das dem Pfad 5 ideal folgende Fahrzeug 300 ist in Fig. 2a und Fig. 2b mit geringerem Kontrast dargestellt. Bei der Einfahrt in die dargestellte Kurve 336 ist eine Fahrzeugposition 21 des Fahrzeugs 300 bei Vorliegen der Instabilität 13 noch im Wesentlichen identisch zu einer Sollposition 23 des Fahrzeugs 300 auf dem Pfad 5.

In Fig. 2a durchfährt das Fahrzeug 300 die Kurve 336 von rechts nach links. Ein Kurveneingang 338 ist also nahe des rechten Bildrandes dargestellt, während ein Kurvenausgang 342 nahe des linken Bildrandes angeordnet ist. Ein Kurvenscheitel 340 der Kurve 336 liegt zwischen dem Kurveneingang 338 und dem Kurvenausgang 342. Im instabilen Fall kann das Fahrzeug 300 dem Verlauf der Kurve 336, der hier dem intendierten Pfad 5 entspricht, nicht folgen. Beim Untersteuern 17 weicht das Fahrzeug 300 nach kurvenaußen von dem Pfad 5 ab. Eine Querablage 25 des Fahrzeugs 300 zum Pfad 5 nimmt vom Kurveneingang 338 zum Kurvenausgang 342 kontinuierlich zu. Eine Ist-Gierrate des Fahrzeugs 300 ist geringer als eine Soll-Gierrate, sodass sich das Fahrzeug 300 nicht ausreichend genug in die Kurve 336 dreht, um dem Pfad 5 zu folgen. Ein Richtungsfehler 31 zwischen einer Ist-Ausrichtung 33 des Fahrzeugs 300 in der Fahrzeugposition 21 und einer Sollausrichtung 35 des stabil fahrenden Fahrzeugs 300 nimmt zum Kurvenausgang 340 ebenfalls zu. Im gezeigten Ausführungsbeispiel stellt sich im Verlauf der Kurvenfahrt also eine mehrdimensionale Positionsabweichung 37 zwischen der Fahrzeugposition 21 und dem Pfad 5 ein. Zum einen weicht die Fahrzeugposition 21 in Form der Querablage 25 quer zu einer Fahrtrichtung von der Sollposition 23 ab und zum anderen ist die Ist-Ausrichtung 33 der Fahrzeugposition 21 von der Sollausrichtung 35 verschieden.

Fig. 2b illustriert ein übersteuerndes Fahrzeug 300. Beim Übersteuern 19 dreht das Fahrzeug 300 stärker ein, als es notwendig wäre, um dem Pfad 5 zu folgen. Auch wenn der Ist-Lenkwinkel 9 des Fahrzeugs 300 kleiner ist als ein für eine stabile Fahrt benötigter Soll-Lenkwinkel überschreitet die Ist-Gierrate des Fahrzeugs 300 beim Übersteuern 19 die Soll-Gierrate. Der Richtungsfehler 31 nimmt beim Übersteuern 19 vom Kurveneingang 338 hin zum Kurvenausgang 342 ebenfalls kontinuierlich zu, hat aber im Vergleich zum Untersteuern 17 ein anderes Vorzeichen. So weist eine Front 346 des Fahrzeugs 300 beim Übersteuern 19 weiter nach kurveninnen als beim stabil fahrenden Fahrzeug 300, wohingegen die Front 346 des Fahrzeugs 300 beim Untersteuern 17 weiter nach kurvenaußen gerichtet ist als beim stabil fahrenden Fahrzeug 300. Aufgrund der im Vergleich zur Soll-Gierrate überhöhten Ist-Gierrate bricht ein Heck 348 des Fahrzeugs 300 beim Übersteuern 19 aus. Im Ausführungsbeispiel gemäß Fig. 2b nimmt dabei auch eine Querablage 25 des Fahrzeugs 300 nach kurvenaußen zu.

In Extremfällen hält der Fahrer den Ist-Lenkwinkel 9 konstant und passt diesen trotz Vorliegen der Positionsabweichung 37 nicht an die Fahrsituation 15 an. In der Regel überwacht der menschliche Fahrer die Fahrzeugposition 21 des Fahrzeugs 300 jedoch im Wesentlichen kontinuierlich. Sobald der Fahrer eine merkliche Positionsabweichung 37 feststellt, versucht dieser das Fahrzeug 300 durch entsprechende Steuereingriffe auf den intendierten Pfad 5 zurückzuführen. Dies gelingt dem Fahrer hier jedoch nicht vollständig. Für den Fall des Untersteuerns 17 (vgl. Fig. 2a), wird ein menschlicher Fahrer den Ist-Lenkwinkel 9 in der Regel umso schneller erhöhen, je größer die Querablage 25 des Fahrzeugs 300 ist. Sobald diese Anpassung des Ist-Lenkwinkels 9 durch den Fahrer eine vordefinierte Änderungsrate (einen vordefinierten Lenkwinkelgradienten) übersteigt, greift ein Stabilitätsregelsystem 350 des Fahrzeugs 300 stabilisierend ein. Das Stabilitätsregelsystem 350 ist hier eine Electronic Stability Control (ESC), die mit dem Fahrzeugnetzwerk 324 verbunden ist (vgl. Fig. 1). Das ESC stellt Bremssignale 326 auf dem Fahrzeugnetzwerk 324 bereit, die das Bremssystem 316 des Fahrzeugs 300 dazu veranlassen, an dem Bremsaktuatoren 320, die den kurveninneren Rädern des Fahrzeugs 300 zugeordnet sind, einen Bremsdruck auszusteuern. Die Bremsaktuatoren verzögern also die kurveninneren Räder. Für die Kurve 336 gemäß Fig. 2a sind die kurveninneren Räder ein linkes Vorderrad 318a und ein linkes Hinterrad 318c des Fahrzeugs 300. Die Verzögerung ist in Fig. 1 durch Pfeile 352 illustriert. Beim Übersteuern 19 (vgl. Fig. 2b)wird hingegen vorzugsweise ein kurvenäußeres Vorderrad, das für die Linkskurve 336 gemäß Fig. 2b ein rechtes Vorderrad 318b des Fahrzeugs ist, verzögert.

Das Stabilitätsregelsystem 350 ist ein Notfallsystem, das erst dann regelnd in den Fahrbetrieb des Fahrzeugs 300 eingreift, wenn sehr große Instabilitäten 13 auftreten. Eingriffe des ESC in stabilen Fahrzuständen müssen vermieden werden, da diese die Sicherheit des Fahrzeugs 300 erheblich beeinträchtigen würden und zu Unfällen führen könnten. Eine Eingriffsschwelle des Stabilitätsregelsystems 350 ist daher sehr hoch gewählt, sodass erst große Instabilitäten 13 des Fahrzeugs 300 bzw. in Reaktion auf große Instabilitäten 13 hervorgerufene große Lenkwinkelgradienten zu einem Eingriff des Stabilitätsregelsystems 350 (ESC) führen. Die hoch gewählten Eingriffsschwellen des Stabilitätsregelsystems 350 bedingen, dass ein stabilisierender Eingriff des Stabilitätsregelsystems 350 erst spät erfolgt, in der Regel erst dann, wenn das Fahrzeug 300 bereits eine sehr große Querablage 25 zum Pfad 5 hat. Der späte Eingriff des Stabilitätsregelsystems 350 birgt daher das Risiko, dass das Fahrzeug 300 von der Fahrbahn 334 abkommt und/oder aufgrund des erhöhten Platzbedarfs mit einem Hindernis, insbesondere dem Gegenverkehr, kollidiert. Auch beim Übersteuern 19 greift das Stabilitätsregelsystem 350 erst spät ein, da Fehleingriffe, die beispielsweise aus Messfehlern resultieren können, vermieden werden müssen. Sofern kein weiteres System vorgesehen ist, obliegt es dem Fahrer eine Instabilität 13 frühzeitig zu erkennen, was insbesondere für ungeübte Fahrer eine große Herausforderung darstellt.

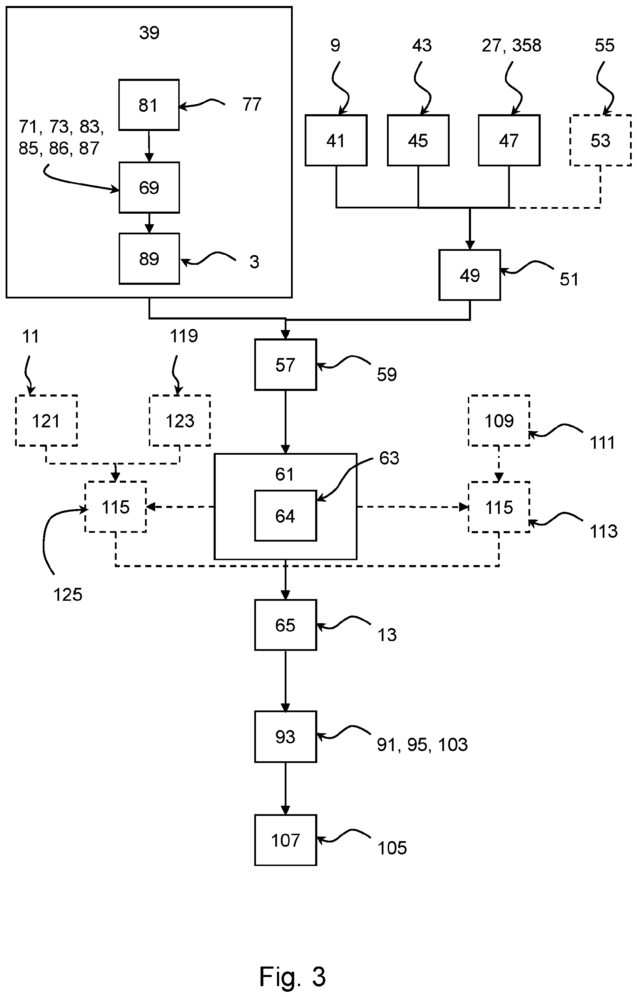

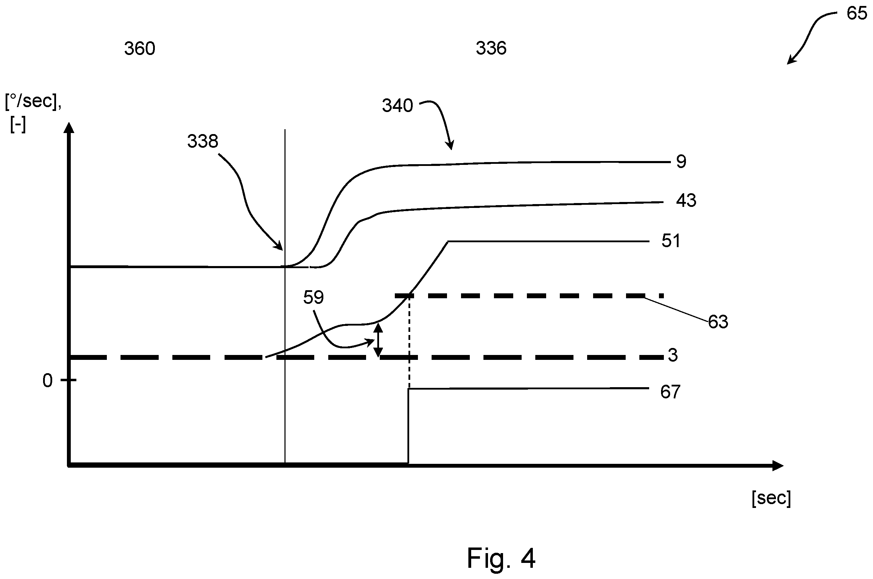

Das Fahrzeug 300 umfasst daher zusätzlich ein Fahrerassistenzsystem 200, das zum Früherkennen einer Instabilität 13 vorgesehen ist. Das Fahrerassistenzsystem 200 weist eine Steuereinheit 202 auf, die mittels einer Schnittstelle 204 mit dem Fahrzeugnetzwerk 324 verbunden ist. Die Steuereinheit 202 ist dazu ausgebildet, Bremssignale 326 für das Bremssystem 316 und Lenksignale 332 auf dem Fahrzeugnetzwerk 324 bereitzustellen. Das Fahrzeug 300 kann also nicht nur vom menschlichen Fahrer, sondern bei Bedarf auch zumindest teilweise von dem Fahrerassistenzsystem 200 gesteuert werden. Das Fahrerassistenzsystem 200 ist dazu ausgebildet, das nachfolgend mit Bezug zu Fig. 3 und Fig. 4 erläuterte Fahrzeugsteuerverfahren 1 auszuführen.

In einem ersten Schritt des Verfahrens 1 ermittelt das Fahrerassistenzsystem 200 im Rahmen eines Ermittelns 39 einen Soll-Eigenlenkgradienten 3 des Fahrzeugs 300 für die Fahrsituation 15. Dieses Ermitteln 39 des Soll-Eigenlenkgradienten 3 wird an späterer Stelle noch weiter erläutert.

In der Fahrsituation 15 steuert der Fahrer das Fahrzeug 300 mi ttels des Lenkrads 344. In der Fahrsituation 15 bzw. während das Fahrzeug 300 im Ausführungsbeispiel gemäß Fig. 2a die Kurve 336 durchfährt, wird der Ist-Lenkwinkel 9 an den gelenkten Vorderrädern 318a, 318b des Fahrzeugs 300 ausgesteuert. Die Steuereinheit 202 empfängt die von dem Lenkradwinkelsensor auf dem Fahrzeugnetzwerk 324 bereitgestellten Lenksignale 332 und verwendet diese zu einem Ermitteln 41 des in der Fahrsituation 15 tatsächlich ausgesteuerten Ist-Lenkwinkels 9.

Das Stabilitätsregelsystem 350 des Fahrzeugs 300 überwacht die Bewegung des Fahrzeugs 300 kontinuierlich. Zu diesem Zweck weist das Stabilitätsregelsystem 350 einen Beschleunigungssensor 354 auf, der dazu ausgebildet ist, eine Querbeschleunigung 43 des Fahrzeugs 300 messtechnisch zu erfassen. Das Stabilitätsregelsystem 350 stellt zur Querbeschleunigung 43 korrespondierende Querbeschleunigungssignale 356 auf dem Fahrzeugnetzwerk bereit. Das Fahrerassistenzsystem 200 empfängt die Querbeschleunigungssignale 356 von dem Fahrzeugnetzwerk 324 und führt darauf basierend ein Erfassen 45 der Querbeschleunigung 43 der Fahrsituation 15 aus. Die erfasste Querbeschleunigung 43 ist im vorliegenden Ausführungsbeispiel also eine Querbeschleunigung 43 oder ein zeitlicher Verlauf der Querbeschleunigung 43 die bzw. der beim Durchfahren der Kurve 336 auf das Fahrzeug 300 wirkt.

In einem weiteren Schritt des Verfahrens 1 führt die Steuereinheit 202 des Fahrerassistenzsystems 200 ein Ermitteln 47 einer geometrischen Charakteristik 27 einer gegenwärtigen Fahrzeugkonfiguration 75 des Fahrzeugs 300 aus. Die geometrische Charakteristik 27 ist in diesem Ausführungsbeispiel ein Radstand 358 des Fahrzeugs 300, der in Fig. 1 gekennzeichnet ist. Das Ermitteln 47 der geometrischen Charakteristik 27 kann basierend auf Signalen erfolgen, die beispielsweise von einer nicht dargestellten Hauptsteuereinheit auf dem Fahrzeugnetzwerk 324 bereitgestellt werden. Hier ist der Radstand 357 jedoch in einem nicht dargestellten Speicher der Steuereinheit 202 gespeichert und wird durch Zugreifen auf den Speicher ermittelt. Das Ermitteln 41 des Ist-Lenkwinkels 9, das Erfassen 45 der Querbeschleunigung 43 und das Ermitteln 47 des Radstands 358 werden im vorliegenden Ausführungsbeispiel vor dem Ermitteln 39 des Soll-Eigenlenkgradienten 3 durchgeführt. Es soll jedoch verstanden werden, dass einer oder mehrere der Ermittlungsschritte auch nach oder zeitgleich mit dem Ermitteln 39 des Soll-Eigenlenkgradienten 3 erfolgen durchgeführt werden können.

Anschließend verwendet die Steuereinheit 202 des Fahrerassistenzsystems den ermittelten Ist-Lenkwinkel 9, die ermittelte Querbeschleunigung 43 und den ermittelten Radstand 358 zu einem Ermitteln 49 eines Ist-Eigenlenkgradienten 51. Im vorliegenden Ausführungsbeispiel ermittelt die Steuereinheit 202 den Ist-Eigenlenkgradienten 51 als relativen Wert mit Bezug zu einem Radius 359 der Kurve 336 (Fig. 2a). In Varianten umfasst das Verfahren 1 ferner ein Ermitteln 53 einer Gierrate 55 des Fahrzeugs 300 in der Fahrsituation 15, wobei das Ermitteln 49 des Ist-Eigenlenkgradienten 51 dann zusätzlich unter Verwendung der ermittelten Gierrate 55 erfolgt. Das Ermitteln 53 der Gierrate 55 ist in Fig. 3 mittels Strichlinien angedeutet. Den ermittelten Ist-Eigenlenkgradienten 51 und den zuvor beim Ermitteln 39 erhaltenen Soll-Eigenlenkgradienten 3 verwendet die Steuereinheit 202 im Anschluss für ein Ermitteln 57 einer Soll-Ist-Abweichung 59, die hier als Differenz von Soll-Eigenlenkgradient 3 und Ist-Eigenlenkgradient 51 berechnet wird.

In einem weiteren Schritt des Verfahrens 1 erfolgt ein Bereitstellen 61 eines ersten Grenzwerts 63 für die Soll-Ist-Abweichung 59. Die Steuereinheit 202 verwendeten den ersten Grenzwert 63 und die Soll-Ist-Abweichung 59 anschließend bei einem Früherkennen 65 einer Instabilität 13. Beim Früherkennen 65 ermittelt die Steuereinheit 202 eine Instabilität 13, wenn der Betrag der Soll-Ist-Abweichung 59 den ersten Grenzwert 63 verletzt. Wenn hier beispielsweise eine Soll-Ist-Abweichung 59 mit einem Wert von 0,1 ermittelt wird, dann wird für einen ersten Grenzwert 63 von 0,05 eine Instabilität 13 ermittelt. Die Steuereinheit 202 ist ferner dazu ausgebildet, beim Früherkennen 65 eine Art der Instabilität 13 zu ermitteln. Für eine negative Soll-Ist-Abweichung 59 ermittelt die Steuereinheit 202 ein Untersteuern 17, da der Ist-Eigenlenkgradient 51 in diesem Fall größer ist, als der Soll-Eigenlenkgradient 3 für die stabile Fahrt des Fahrzeugs 300. Analog ermittelt die Steuereinheit 202 ein Übersteuern 19, falls die Soll-Ist-Abweichung 59 einen positiven Wert hat.

Fig. 4 illustriert das Früherkennen 65 eines Untersteuerns 17 anhand eines zeitlichen Verlaufs des Soll-Eigenlenkgradienten 39, des Ist-Eigenlenkgradienten 51, des Ist-Lenkwinkels 9 und der Querbeschleunigung 43. Der zeitliche Verlauf beschreibt die Fahrsituation 15 in der das Fahrzeug 300 zunächst auf einem geraden Streckenabschnitt 360 und dann die Kurve 336 durchfährt. Im geraden Streckenabschnitt 360 wird nicht gelenkt, sodass der Ist-Lenkwinkel 9 einen Wert von null hat. Der Ist-Eigenlenkgradient 51 wird im geraden Streckenabschnitt 360 nicht ermittelt und der Soll-Eigenlenkgradient hat einen konstanten Wert. Beim Einfahren in die Kurve 336 stellt der Fahrer des Fahrzeugs 300 an der Lenkung 314 einen Ist-Lenkwinkel 9 ein, den der Fahrer zum Befahren der Kurve 336 für angemessen hält. Beginnend vom Kurveneingang 338 steigt der Ist-Lenkwinkel 9 zunächst an und wird dann vom Fahrer im Wesentlichen konstant gehalten, was durch den weitgehend waagerechten Verlauf des Ist-Lenkwinkels 9 gekennzeichnet ist. Mit einer geringen zeitlichen Verzögerung führt das Aussteuern des Ist-Lenkwinkels 9 an den Vorderrädern 318a, 318b des Fahrzeugs 300 dazu, das sich das Fahrzeug 300 in die Kurve 336 eindreht, sodass die Querbeschleunigung 43 am Kurveneingang 338 zunächst zunimmt und dann im Wesentlichen konstant bleibt. Der Fahrer schätzt die Fahrsituation 15 im durch Fig. 4 illustrierten Fall jedoch falsch ein und lenkt nicht stark genug ein bzw. steuert einen zu geringen Ist-Lenkwinkel 9 aus. Der ausgesteuerte Ist-Lenkwinkel reicht also nicht aus, um das Fahrzeug 300 entlang des Pfads 5 zu steuern, da das Fahrzeug 300 hier zum Untersteuern 17 neigt. Dadurch das der Fahrer den Ist-Lenkwinkel 9 in einem gewohnten Maß führt, wird kein Regelsystemeingriff des Stabilitätsregelsystems 350 eingeleitet, obwohl sich nicht die gewünschte Gierrate des Fahrzeugs 300 einstellt. Ab dem Kurveneingang 338 ermittelt die Steuereinheit 202 den Ist-Eigenlenkgradienten 51. Dieser steigt im vorliegenden Fall über den zeitlichen Verlauf an. Dies ist dadurch begründet, dass sich aufgrund des untersteuernden Fahrverhaltens des Fahrzeugs 300 eine geringere Gierrate 55 des Fahrzeugs 300 einstellt als erwartet. Der eingestellte Ist-Lenkwinkel 9 bewirkt ein weniger starkes Gieren des Fahrzeugs 300 um dessen Hochachse als erwartet. In der Folge ist auch eine auf das Fahrzeug 300 wirkende Querbeschleunigung 43 geringer als erwartet und der Ist-Eigenlenkgradient 51 steigt an. Im Bereich des Kurvenscheitels 340 bleibt der Ist-Eigenlenkgradient 51 dann auf einem konstanten Wert. Der Soll-Eigenlenkgradient 3 ändert ich bei gleichem Kurvenradius und gleicher Querbeschleunigung 43 des Fahrzeugs 300 nicht , sodass die Soll-Ist-Abweichung 59 zwischen dem Soll-Eigenlenkgradient 3 und dem Ist-Eigenlenkgradient 51 ausgehend vom Kurveneingang 338 ebenfalls zunimmt. Sobald die Soll-Ist-Abweichung 59 den ersten Grenzwert 63 verletzt, wird eine Instabilität 13 frühzeitig erkannt. Das Früherkennen 65 ist in Fig. 4 durch eine sprungartig ansteigende Flanke eines Indikators 67 gekennzeichnet. Beim Früherkennen 65 wird ferner die Art der Instabilität 13 ermittelt. Für den Verlauf gemäß Fig. 4 wird ein Untersteuern 17 erkannt, da der ermittelte Ist-Eigenlenkgradient 51 einen positiven Wert aufweist (d.h. größer null ist). Vorteilhaft an dem beschriebenen Früherkennen 65 ist, dass dies allein basierend auf Kenngrößen der Fahrzeugbewegung erfolgen kann.

Der Soll-Eigenlenkgradient 3 kann in dem Verfahren 1 von einer anderen Einheit des Fahrzeugs 300 auf dem Fahrzeugnetzwerk 324 bereitgestellt und dann von der Steuereinheit 202 ermittelt werden. Vorzugsweise erfolgt das Ermitteln 39 des Soll-Eigenlenkgradienten 3 aber durch die Steuereinheit 202 selbst. Im in Fig. 3 illustrierten Verfahren 1 umfasst das Ermitteln 39 des Soll-Eigenlenkgradienten 3 zunächst ein Ermitteln 69 von Fahrdaten 71 einer analogen Fahrsituation 73. Hierbei erfasst die Steuereinheit 202 des Fahrerassistenzsystems 200 in einem ersten Schritt eine gegenwärtige Fahrzeuggeschwindigkeit 77 (Ermitteln 81 in Fig. 3). Der Ist-Lenkwinkel 9 liegt bereits in Folge des Ermittelns 41 vor. Beim Ermitteln 69 von Fahrdaten 71 ermittelt die Steuereinheit 202 eine Referenzquerbeschleunigung 85 des Fahrzeugs 300 in der analogen Fahrsituation 73. Im vorliegenden Ausführungsbeispiel ist die analoge Fahrsituation 73 eine zeitlich vor der Fahrsituation 15 liegende Referenzfahrsituation, wobei ein Referenzlenkwinkel 83 innerhalb einer Lenkwinkeltoleranz um den ermittelten Ist-Lenkwinkel 9 und eine Referenzgeschwindigkeit 86 innerhalb einer Geschwindigkeitstoleranz um die ermittelte Fahrzeuggeschwindigkeit 77 liegen. Ferner ist die analoge Fahrsituation 73 hier eine in der Vergangenheit erfolgte Referenzfahrsituation desselben Fahrzeugs 300. Für diese analoge Fahrsituation 73 wird anschließend aus den Fahrdaten 71 der Soll-Eigenlenkgradient 3 ermittelt (Ermitteln 89 in Fig. 3). Der Soll-Eigenlenkgradient 3 kann unmittelbar durch die Fahrdaten 71 bzw. einen Teil der Fahrdaten 71 repräsentiert sein. Es kann aber auch vorgesehen sein, dass der Soll-Eigenlenkgradient 3 unter Verwendung des Referenzlenkwinkels 83, der Referenzquerbeschleunigung 85, einer Referenzgierrate 87 und/oder weiteren von den Fahrdaten 71 umfassten Größen ermittelt wird.

Ohne zusätzlichen Eingriff des Fahrerassistenzsystems 200 weicht die Fahrzeugposition 21 des Fahrzeugs 300 im Verlauf der Kurve 336 immer weiter von dem intendierten Pfad 5 ab. Ein sicherer Betrieb des Fahrzeugs 300 ist gefährdet. Die Steuereinheit 202 ist daher dazu ausgebildet, in Antwort auf das Früherkennen 65 der Instabilität 13 (des Untersteuerns 17 in Fig. 2a) einen Fahrdynamikeingriff 91 auszuführen (Ausführen 93 in Fig. 3). Der Fahrdynamikeingriff 91 ist im vorliegenden Ausführungsbeispiel ein Bremseingriff 95. Beim Bremseingriff 95 werden für das Untersteuern 17 die kurveninneren Räder (Räder 318a, 318c in Fig. 1) des Fahrzeugs 300 gebremst. Hierfür stellt die Steuereinheit 202 des Fahrerassistenzsystems 200 entsprechende Bremssignale 326 auf dem Fahrzeugnetzwerk 324 bereit. Der Bremsmodulator 322 steuert daraufhin mittels der Bremsaktuatoren 320 einen Bremsschlupf an den kurveninneren Rädern 318 aus. Der Bremseingriff 95 kann analog zu einem Regelsystemeingriff des Stabilitätsregelsystem 350 durch die Pfeile 352 illustriert werden, erfolgt jedoch bei kleineren Schräglaufwinkeln an den Vorderrädern 318a, 318b (Untersteuern) bzw. den Hinterrädern 318c, 318d (Übersteuern). Der Bremseingriff 95 bzw. die dadurch bedingte Verzögerung der kurveninneren Räder 318 bewirkt ein Giermoment 55 des Fahrzeugs 300 in Richtung der Kurve 336.

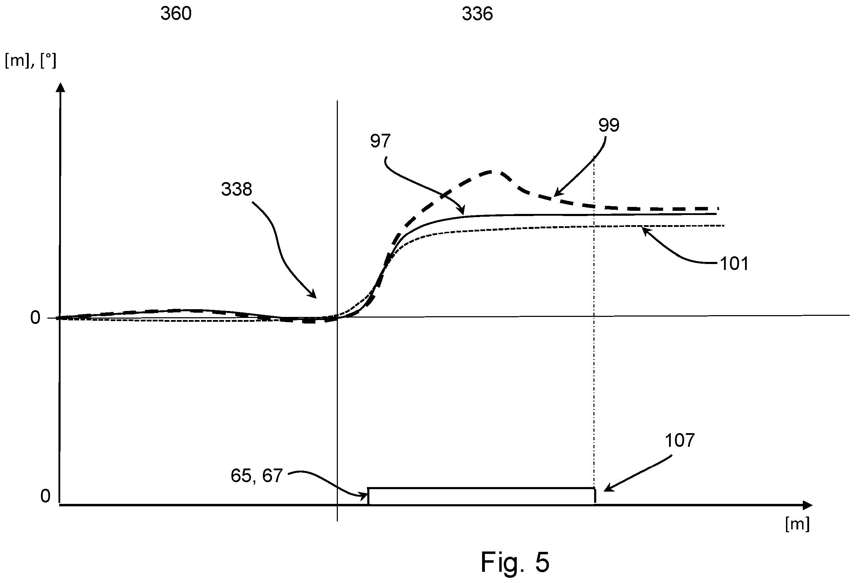

Fig. 5 illustriert einen Verlauf 97 des Ist-Lenkwinkels 9 entlang des Pfads 5, wobei die Steuereinheit 202 den Fahrdynamikeingriff 91 durchführt. Zum Vergleich ist in Fig. 5 ein Referenzverlauf 99 des Ist-Lenkwinkels 9 ohne stabilisierenden Bremseingriff 95 dargestellt. Der Verlauf 97 verdeutlicht, dass der Ist-Lenkwinkel 9 durch den Bremseingriff 95 und das dadurch bedingte zusätzliche Giermoment 55 nahe an einem kinematischen Lenkwinkel 101 geführt werden kann. Der kinematische Lenkwinkel 101 ist dabei ein Lenkwinkel eines neutral steuernden Fahrzeugs 300, also eines Fahrzeugs 300, das weder untersteuert noch übersteuert, für die Kurve 336. Im Gegensatz dazu, muss der Ist-Lenkwinkel 9 ohne stabilisierenden Fahrdynamikeingriff 91 erheblich stärker erhöht werden um das Fahrzeug 300 noch sicher entlang des Pfads 5 zu führen. Der Fahrdynamikeingriff 91 gleicht so einen vom Fahrer des Fahrzeugs 300 zu gering gewählten Ist-Lenkwinkel 9 aus, wodurch ein Zugewinn an Sicherheit erreicht wird. Beispielsweise kann der Platzbedarf reduziert sein und ein Kollisionsrisiko verringert werden. Ferner kann zusätzlich oder alternativ zum Bremseingriff 95 eine Motormomentenlimitierung 103 durchgeführt werden, bei der ein von dem Antriebsmotor 314 des Fahrzeugs 300 bereitstellbares Motormoment limitiert wird. Durch die Motormomentenlimitierung 103 kann die Geschwindigkeit des Fahrzeugs 300 reduziert werden.

Sobald die Soll-Ist-Abweichung 59 eine Toleranzgrenze 105 erreicht oder unterschreitet, beendet die Steuereinheit 202 den Fahrdynamikeingriff 91 (Beenden 107 in Fig. 3). Dies ist beispielsweise der Fall, wenn das Fahrzeug 300 die Kurve 336 am Kurvenausgang 342 verlässt und der menschliche Fahrer den Ist-Lenkwinkel 9 zurücknimmt bzw. das Fahrzeug 300 gerade steuert.

Eine Höhe des ersten Grenzwert 63 ist im Verfahren 1 so gewählt, das eine Instabilität 13 zuverlässig und frühzeitig erkannt wird. Der erste Grenzwert 63 steht nach dem Bereitstellen 65 zur Verfügung, wobei der erste Grenzwert 63 beim Bereitstellen 65 unter Verwendung einer zuvor ermittelten Lastcharakteristik 69 definiert wird (Definieren 64 in Fig. 3). Dieser kann unmittelbar beim Früherkennen 65 einer Instabilität 13 genutzt werden. Es kann aber in bevorzugten Ausgestaltungen auch vorgesehen sein, dass der erste Grenzwert 63 in Abhängigkeit weiterer Parameter angepasst wird, bevor dieser beim Früherkennen 65 einer Instabilität 13 mit der Soll-Ist-Abweichung 59 abgeglichen wird. Im Ausführungsbeispiel gemäß Fig. 3 wird hierfür ein Ermitteln 109 einer Lenkoszillation 111 durchgeführt. Die Steuereinheit 202 des Fahrerassistenzsystems 200 überwacht dazu einen zeitlichen Verlauf des Ist-Lenkwinkels 9. Falls die ermittelte Lenkoszillation 111 innerhalb eines Eigenfrequenzbandes 113 des Fahrzeugs 300 liegt, führt die Steuereinheit 202 ein Herabsetzen 115 des ersten Grenzwerts 63 aus. Der erste Grenzwert 63 wird beim Herabsetzen 115 reduziert, sodass eine Instabilität 13 früher erkannt wird. Das Eigenfrequenzband 113 wird vorzugsweise basierend auf einem Fahrzeugmodell von der Steuereinheit 202 ermittelt. Bei diesem Modellieren dynamischer Eigenschaften des Fahrzeugs 300 kann die Steuereinheit bevorzugt auch geometrische Charakteristika 27 und/oder eine oder mehrere Lastcharakteristika 79 des Fahrzeugs 300 berücksichtigen.

Der erste Grenzwert 63 kann ferner herabgesetzt werden (Herabsetzen 117 in Fig. 3), falls der Ist-Knickwinkel 11 einen Soll-Knickwinkel 119 um einen Knickwinkeltoleranzwert 125 überschreitet. Der Ist-Knickwinkel 11 und der Soll-Knickwinkel 119 werden hierfür vorab ermittelt. Für ein Ermitteln 121 des Ist-Knickwinkels 11 verwendet die Steuereinheit 202 Knickwinkelsignale, die von einem in den Figuren nicht dargestellten Knickwinkelsensor auf dem Fahrzeugnetzwerk 324 bereitgestellt werden. Ein Ermitteln 123 des Soll-Knickwinkels 119 erfolgt ebenfalls durch die Steuereinheit 202, wobei diese hier auf dynamische Eigenschaften des Fahrzeugs 300 zurückgreift, die basierend auf einem Fahrzeugmodell ermittelt werden. Die optionalen Schritte des Herabsetzens 115 in Folge einer Lenkoszillation 111 und des Herabsetzen 117 in Folge eines unzulässigen Ist-Knickwinkels 11 sind in Fig. 3 durch Strichlinien verdeutlicht. Nach dem Herabsetzen 115 und dem Herabsetzen 117 wird der erste Grenzwert 63 zum Frühermitteln 65 verwendet. Instabilitäten 13 des Fahrzeugs 300 können so in besonders kritischen Fahrsituationen 15 noch früher erkannt werden.

Das Verfahren 1 wurde vorstehend zur Illustration anhand der Steuereinheit 202 des Fahrerassistenzsystems 200 erläutert. Es soll jedoch verstanden werden, dass das Verfahren 1 nicht von der Steuereinheit 202 durchgeführt werden muss. Insbesondere kann das Verfahren 1 oder einzelne Schritte des Verfahrens 1 auch von einer autonomen Einheit des Fahrzeugs 300, einer Hauptsteuereinheit des Fahrzeugs 300 oder einer Lenksteuereinheit der Lenkung 312 durchgeführt werden.

### Bezugszeichen (Teil der Beschreibung)

- 1: Verfahren
- 3: Soll-Eigenlenkgradient
- 5: intendierter Pfad
- 7: Soll-Geschwindigkeit
- 9: Ist-Lenkwinkel
- 11: Ist-Knickwinkel
- 13: Instabilität
- 15: Fahrsituation
- 17: Untersteuern
- 19: Übersteuern
- 21: Fahrzeugposition
- 23: Sollposition
- 25: Querablage
- 27: geometrische Charakteristik
- 31: Richtungsfehler
- 33: Ist-Ausrichtung
- 35: Sollausrichtung
- 37: Positionsabweichung
- 39: Ermitteln des Soll-Eigenlenkgradienten
- 41: Ermitteln des Ist-Lenkwinkels
- 43: Querbeschleunigung
- 45: Erfassen der Querbeschleunigung
- 47: Ermitteln der geometrischen Charakteristik
- 49: Ermitteln eines Ist-Eigenlenkgradienten
- 51: Ist-Eigenlenkgradient
- 53: Ermitteln einer Gierrate
- 55: Gierrate
- 57: Ermitteln einer Soll-Ist-Abweichung
- 59: Soll-Ist-Abweichung
- 61: Bereitstellen eines ersten Grenzwerts
- 63: erster Grenzwert
- 64: Definieren des ersten Grenzwerts unter Verwendung einer Lastcharakteristik
- 65: Früherkennen einer Instabilität
- 67: Indikator
- 69: Ermitteln von Fahrdaten
- 71: Fahrdaten
- 73: analoge Fahrsituation
- 75: gegenwärtige Fahrzeugkonfiguration
- 77: gegenwärtige Fahrzeuggeschwindigkeit
- 79: Lastcharakteristik
- 81: Ermitteln der gegenwärtigen Fahrzeuggeschwindigkeit
- 83: Referenzlenkwinkel
- 85: Referenzquerbeschleunigung
- 86: Referenzgeschwindigkeit
- 87: Referenzgierrate
- 89: Ermitteln des Soll-Eigenlenkgradienten aus den Fahrdaten
- 91: Fahrdynamikeingriff
- 93: Ausführen des Fahrdynamikeingriffs
- 95: Bremseingriff
- 97: Verlauf des Ist-Lenkwinkels mit Fahrdynamikeingriff
- 99: Referenzverlauf des Ist-Lenkwinkels ohne Fahrdynamikeingriff
- 101: kinematischer Lenkwinkel
- 103: Motormomentenlimitierung
- 105: Toleranzgrenze
- 107: Beenden des Fahrdynamikeingriffs
- 109: Ermitteln einer Lenkoszillation
- 111: Lenkoszillation
- 113: Eigenfrequenzband
- 115: Herabsetzen des ersten Grenzwerts in Folge einer Lenkoszillation
- 117: Herabsetzen des ersten Grenzwerts in Folge eines einen Knickwinkeltoleranzwert überschreitenden Ist-Knickwinkels
- 119: Soll-Knickwinkel
- 121: Ermitteln des Ist-Knickwinkels Knickwinkeltoleranzwert
- 123: Ermitteln des Soll-Knickwinkels
- 125: Knickwinkeltoleranzwert
- 200: Fahrerassistenzsystem
- 202: Steuereinheit
- 204: Schnittstelle
- 300: Fahrzeug
- 302: Fahrzeugzug
- 304: Zugfahrzeug
- 306: Anhängerfahrzeug
- 310: Fahrzeugaktuatoren
- 312: Lenkung
- 314: Antriebsmotor
- 316: Bremssystem
- 318: Räder
- 318a, 318b: Vorderrad
- 318c: Hinterrad
- 320: Bremsaktuatoren
- 322: Bremsmodulator
- 324: Fahrzeugnetzwerk
- 326: Bremssignale
- 328: Vorderachse
- 330: Fußbremsmodul
- 332: Lenksignale
- 334: Deichsel
- 336: Kurve
- 338: Kurveneingang
- 340: Kurvenscheitel
- 342: Kurvenausgang
- 344: Lenkrad
- 346: Front
- 348: Heck
- 350: Stabilitätsregelsystem
- 352: Pfeile
- 354: Beschleunigungssensor
- 356: Querbeschleunigungssignale
- 358: Radstand
- 359: Radius
- 360: gerader Streckenabschnitt
- 362: Schwerpunkt des Zugfahrzeugs

## Patentansprüche

1. Verfahren (1) zum Steuern eines Fahrzeugs (300) in einer Fahrsituation (15), aufweisend:
- Ermitteln (39) eines Soll-Eigenlenkgradienten (3) des Fahrzeugs (300) für die Fahrsituation (15);
- Ermitteln (41) eines Ist-Lenkwinkels (9) des Fahrzeugs (300) in der Fahrsituation (15);
- Ermitteln (49) eines Ist-Eigenlenkgradienten (51) des Fahrzeugs (300) in der Fahrsituation (15) basierend auf dem Ist-Lenkwinkel (9);
- Ermitteln (57) einer Soll-Ist-Abweichung (59) zwischen dem Soll-Eigenlenkgradienten (3) und dem Ist-Eigenlenkgradienten (51);
**gekennzeichnet durch**
- Bereitstellen (61) eines ersten Grenzwerts (63) für die Soll-Ist-Abweichung (59);
- Früherkennen (65) einer Instabilität (13) des Fahrzeugs (300), falls die ermittelte Soll-Ist-Abweichung (59) den ersten Grenzwert (63) verletzt; und
in Antwort auf das Früherkennen (65) einer Instabilität (13) des Fahrzeugs (300):
- Ausführen (93) zumindest eines Fahrdynamikeingriffs (91) unter Verwendung zumindest eines Fahrzeugaktuators (310) des Fahrzeugs (300), um der Instabilität (13) des Fahrzeugs (300) entgegenzuwirken.

2. Verfahren (1) nach Anspruch 1, wobei das Ermitteln (39) des Soll-Eigenlenkgradienten (3) des Fahrzeugs (300) für die Fahrsituation (15) aufweist:
- Ermitteln (69) von Fahrdaten (71) zumindest einer analogen Fahrsituation (73);
- Ermitteln (89) des Soll-Eigenlenkgradienten (2) aus den Fahrdaten (71).

3. Verfahren nach Anspruch 1 oder 2, ferner aufweisend:
- Ermitteln (53) einer Gierrate (55) des Fahrzeugs (300) in der Fahrsituation (15); und/oder
- Erfassen (45) einer Querbeschleunigung (43) des Fahrzeugs (300) in der Fahrsituation (15);
wobei das Ermitteln (49) eines Ist-Eigenlenkgradienten (51) des Fahrzeugs (300) in der Fahrsituation (15) basierend auf dem Ist-Lenkwinkel (9) und zusätzlich unter Verwendung der ermittelten Gierrate (55) und/oder unter Verwendung der ermittelten Querbeschleunigung (43) erfolgt.

4. Verfahren nach einem der Ansprüche 1 bis 3, ferner aufweisend:
- Ermitteln (41) zumindest einer geometrischen Charakteristik (27) einer gegenwärtigen Fahrzeugkonfiguration (75) des Fahrzeugs (300);
wobei das Ermitteln (79) eines Ist-Eigenlenkgradienten (51) des Fahrzeugs (300) in der Fahrsituation (15) basierend auf dem Ist-Lenkwinkel (9) zusätzlich unter Verwendung der geometrischen Charakteristik (27) des Fahrzeugs (300) erfolgt.

5. Verfahren (1) nach einem der Ansprüche 1 bis 4, wobei der Fahrdynamikeingriff (91) die Instabilität (13) zumindest teilweise kompensiert.

6. Verfahren (1) nach Anspruch 5, ferner aufweisend:
- Beenden (107) des Fahrdynamikeingriffs (91), falls die Soll-Ist-Abweichung (59) eine Toleranzgrenze (105) erreicht oder unterschreitet.

7. Verfahren (1) nach einem der Ansprüche 1 bis 6, wobei das Bereitstellen (61) eines ersten Grenzwerts (63) für die Soll-Ist-Abweichung (59) aufweist:
- Ermitteln (81) zumindest einer Lastcharakteristik (79) der gegenwärtigen Fahrzeugkonfiguration (75);
- Definieren (64) des ersten Grenzwerts (63) für die Soll-Ist-Abweichung (59) unter Verwendung der ermittelten Lastcharakteristik (79).

8. Verfahren (1) nach einem der Ansprüche 1 bis 7, wobei der Fahrdynamikeingriff (91) ein Bremseingriff (95) an einer oder mehreren Bremsen des Fahrzeugs (300), eine Motormomentenlimitierung (103) eines Motors (314) des Fahrzeugs (300), ein Bereitstellen asymmetrischer Antriebsmomente an Rädern (318) des Fahrzeugs (300) und/oder ein Bereitstellen eines unterstützenden Lenkmoments mittels einer lenkbaren Zusatzachse des Fahrzeugs (300) ist.

9. Verfahren (1) nach einem der Ansprüche 1 bis 8, wobei beim Früherkennen (65) einer Instabilität (13) des Fahrzeugs (300) ermittelt wird, ob die Instabilität (13) ein Untersteuern (17) des Fahrzeugs (300) oder ein Übersteuern (19) des Fahrzeugs (300) in der Fahrsituation (15) ist.

10. Verfahren (1) nach einem der Ansprüche 1 bis 9, ferner aufweisend:
- Ermitteln (109) einer Lenkoszillation (111) unter Verwendung eines Zeitverlaufs des Ist-Lenkwinkels (9); und
in Antwort auf das Ermitteln (109) einer Lenkoszillation (111):
- Herabsetzen (115) des ersten Grenzwerts (63), falls eine Lenkoszillation (111) ermittelt wird, die in einem Eigenfrequenzband (113) des Fahrzeugs (300) liegt.

11. Verfahren (1) nach einem der Ansprüche 1 bis 10, ferner aufweisend:
- Ermitteln (121) eines Ist-Knickwinkels (11) zwischen einem Zugfahrzeug (304) und einem Anhängerfahrzeug (306) des Fahrzeugs (300);
- Ermitteln (123) eines Soll-Knickwinkels (119) für die Fahrsituation (15); und
- Herabsetzen (117) des ersten Grenzwerts (21), falls der Ist-Knickwinkel (11) den Soll-Knickwinkel (119) um einen Knickwinkeltoleranzwert (125) überschreitet.

12. Verfahren (1) nach einem der Ansprüche 1 bis 11, ferner aufweisend:
- Ermitteln einer gegenwärtigen Fahrzeuggeschwindigkeit des Fahrzeugs in der Fahrsituation;
wobei das Bereitstellen (61) eines ersten Grenzwerts (63) für die Soll-Ist-Abweichung (59) ein Definieren des ersten Grenzwerts (63) zumindest unter Verwendung der ermittelten Fahrzeuggeschwindigkeit umfasst, wobei der erste Grenzwert (63) vorzugsweise indirekt proportional zur Fahrzeuggeschwindigkeit ist.

13. Fahrerassistenzsystem (200) zum Verbessern einer Trajektorientreue eines Fahrzeugs (300) in einer Fahrsituation (15), aufweisend eine Steuereinheit (202), die dazu ausgebildet ist, das Verfahren (1) gemäß einem der vorstehenden Ansprüche 1 bis 12 durchzuführen.

14. Fahrzeug (300), aufweisend zumindest einen Fahrzeugaktuator (310) und ein Fahrerassistenzsystem (200) nach Anspruch 13.

15. Computerprogrammprodukt mit Programmcode-Mitteln, die auf einem computerlesbaren Datenträger gespeichert sind, und die das Verfahren (1) nach einem der Ansprüche 1 bis 12 ausführen, wenn das Computerprogrammprodukt auf einer Recheneinheit ausgeführt wird.

## Claims

1. Method (1) for controlling a vehicle (300) in a driving situation (15), comprising:
- determining (39) a target self-steering gradient (3) of the vehicle (300) for the driving situation (15);
- determining (41) an actual steering angle (9) of the vehicle (300) in the driving situation (15);
- determining (49) an actual self-steering gradient (51) of the vehicle (300) in the driving situation (15) on the basis of the actual steering angle (9);
- determining (57) a target-actual deviation (59) between the target self-steering gradient (3) and the actual self-steering gradient (51);
**characterized by**
- providing (61) a first limit value (63) for the target-actual deviation (59);
- early detection (65) of an instability (13) of the vehicle (300) if the determined target-actual deviation (59) violates the first limit value (63); and in response to the early detection (65) of an instability (13) of the vehicle (300):
- performing (93) at least one driving dynamics intervention (91) using at least one vehicle actuator (310) of the vehicle (300) to counteract the instability (13) of the vehicle (300).

2. Method (1) according to claim 1, wherein the determining (39) of the target self-steering gradient (3) of the vehicle (300) for the driving situation (15) comprises:
- determining (69) driving data (71) of at least one analogous driving situation (73);
- determining (89) the target self-steering gradient (2) from the driving data (71).

3. Method according to claim 1 or 2, further comprising:
- determining (53) a yaw rate (55) of the vehicle (300) in the driving situation (15); and/or
- detecting (45) a lateral acceleration (43) of the vehicle (300) in the driving situation (15);
wherein the determining (49) of an actual self-steering gradient (51) of the vehicle (300) in the driving situation (15) is carried out on the basis of the actual steering angle (9) and additionally using the determined yaw rate (55) and/or using the determined lateral acceleration (43).

4. Method according to any of claims 1 to 3, further comprising:
- determining (41) at least one geometric characteristic (27) of a current vehicle configuration (75) of the vehicle (300);
wherein the determining (79) of an actual self-steering gradient (51) of the vehicle (300) in the driving situation (15) is carried out on the basis of the actual steering angle (9), additionally using the geometric characteristic (27) of the vehicle (300).

5. Method (1) according to any of claims 1 to 4, wherein the driving dynamics intervention (91) at least partially compensates for the instability (13).

6. Method (1) according to claim 5, further comprising:
- terminating (107) the driving dynamics intervention (91) if the target-actual deviation (59) reaches or remains below a tolerance limit (105).

7. Method (1) according to any of claims 1 to 6, wherein the providing (61) of a first limit value (63) for the target-actual deviation (59) comprises:
- determining (81) at least one load characteristic (79) of the current vehicle configuration (75);
- defining (64) the first limit value (63) for the target-actual deviation (59) using the determined load characteristic (79).

8. Method (1) according to any of claims 1 to 7, wherein the driving dynamics intervention (91) is a brake intervention (95) on one or more brakes of the vehicle (300), a motor torque limitation (103) of a motor (314) of the vehicle (300), a provision of asymmetric drive torques to wheels (318) of the vehicle (300) and/or a provision of a supporting steering torque by means of a steerable additional axle of the vehicle (300).

9. Method (1) according to any of claims 1 to 8, wherein, upon early detection (65) of an instability (13) of the vehicle (300), it is determined whether the instability (13) is an understeer (17) of the vehicle (300) or an oversteer (19) of the vehicle (300) in the driving situation (15).

10. Method (1) according to any of claims 1 to 9, further comprising:
- determining (109) a steering oscillation (111) using a time history of the actual steering angle (9); and
in response to the determining (109) of a steering oscillation (111):
- lowering (115) the first limit value (63) if a steering oscillation (111) is determined which lies within a natural frequency band (113) of the vehicle (300).

11. Method (1) according to any of claims 1 to 10, further comprising:
- determining (121) an actual articulation angle (11) between a towing vehicle (304) and a trailer vehicle (306) of the vehicle (300);
- determining (123) a target articulation angle (119) for the driving situation (15); and
- lowering (117) the first limit value (21) if the actual articulation angle (11) exceeds the target articulation angle (119) by an articulation angle tolerance value (125).

12. Method (1) according to any of claims 1 to 11, further comprising:
- determining a current vehicle speed of the vehicle in the driving situation;
wherein the providing (61) of a first limit value (63) for the target-actual deviation (59) includes defining the first limit value (63) at least using the determined vehicle speed, wherein the first limit value (63) is preferably inversely proportional to the vehicle speed.

13. Driver assistance system (200) for improving trajectory fidelity of a vehicle (300) in a driving situation (15), comprising a control unit (202) configured to perform the method (1) according to any of the preceding claims 1 to 12.

14. Vehicle (300) comprising at least one vehicle actuator (310) and a driver assistance system (200) according to claim 13.

15. Computer program product comprising program code means stored on a computer-readable data carrier, which execute the method (1) according to any of claims 1 to 12 when the computer program product is executed on a computing unit.

## Revendications

1. Procédé (1) de commande d'un véhicule (300) dans une situation de conduite (15), présentant :
- la détermination (39) d'un gradient de braquage propre théorique (3) du véhicule (300) pour la situation de conduite (15) ;
- la détermination (41) d'un angle de braquage réel (9) du véhicule (300) dans la situation de conduite (15) ;
- la détermination (49) d'un gradient de braquage propre réel (51) du véhicule (300) dans la situation de conduite (15) sur la base de l'angle de braquage réel (9) ;
- la détermination (57) d'un écart théorique-réel (59) entre le gradient de braquage propre théorique (3) et le gradient de braquage propre réel (51) ;
**caractérisé par**
- la fourniture (61) d'une première valeur limite (63) pour l'écart théorique-réel (59) ;
- la reconnaissance précoce (65) d'une instabilité (13) du véhicule (300), si l'écart entre théorique-réel (59) déterminé ne respecte pas la première valeur limite (63) ; et en réponse à la reconnaissance précoce (65) d'une instabilité (13) du véhicule (300) :
- la mise en œuvre (93) d'au moins une intervention sur la dynamique de conduite (91) à l'aide d'au moins un actionneur (310) de véhicule du véhicule (300), afin de contrer l'instabilité (13) du véhicule (300).

2. Procédé (1) selon la revendication 1, dans lequel la détermination (39) du gradient de braquage propre théorique (3) du véhicule (300) pour la situation de conduite (15) présente :
- la détermination (69) de données de conduite (71) d'au moins une situation de conduite analogique (73) ;
- la détermination (89) du gradient de braquage propre théorique (2) à partir des données de conduite (71).

3. Procédé selon la revendication 1 ou 2, présentant en outre :
- la détermination (53) d'un taux de lacet (55) du véhicule (300) dans la situation de conduite (15) ; et/ou
- la détection (45) d'une accélération transversale (43) du véhicule (300) dans la situation de conduite (15) ;
dans lequel la détermination (49) d'un gradient de braquage propre réel (51) du véhicule (300) dans la situation de conduite (15) s'effectue sur la base de l'angle de braquage réel (9) et de plus à l'aide du taux de lacet (55) déterminé et/ou de l'accélération transversale (43) déterminée.

4. Procédé selon l'une des revendications 1 à 3, présentant en outre :
- la détermination (41) d'au moins une caractéristique géométrique (27) d'une configuration de véhicule actuelle (75) du véhicule (300) ;
dans lequel la détermination (79) d'un gradient de braquage propre réel (51) du véhicule (300) dans la situation de conduite (15) s'effectue sur la base de l'angle de braquage réel (9) et de plus à l'aide de la caractéristique géométrique (27) du véhicule (300).

5. Procédé (1) selon l'une des revendications 1 à 4, dans lequel l'intervention sur la dynamique de conduite (91) compense au moins partiellement l'instabilité (13).

6. Procédé (1) selon la revendication 5, présentant en outre :
- l'arrêt (107) de l'intervention sur la dynamique de conduite (91) si l'écart théorique-réel (59) atteint ou passe en dessous d'une limite de tolérance (105).

7. Procédé (1) selon l'une des revendications 1 à 6, dans lequel la fourniture (61) d'une première valeur limite (63) pour l'écart théorique-réel (59) présente :
- la détermination (81) d'au moins une caractéristique de charge (79) de la configuration de véhicule actuelle (75) ;
- la définition (64) de la première valeur limite (63) pour l'écart théorique-réel (59) à l'aide de la caractéristique de charge (79) déterminée.

8. Procédé (1) selon l'une des revendications 1 à 7, dans lequel l'intervention sur la dynamique de conduite (91) comprend une intervention de freinage (95) sur un ou plusieurs freins du véhicule (300), une limitation de couple moteur (103) d'un moteur (314) du véhicule (300), une fourniture de couples d'entraînement asymétriques aux roues (318) du véhicule (300) et/ou une fourniture d'un couple de braquage d'assistance par le biais d'un essieu supplémentaire orientable du véhicule (300).

9. Procédé (1) selon l'une des revendications 1 à 8, dans lequel, lors de la reconnaissance précoce (65) d'une instabilité (13) du véhicule (300), il est déterminé si l'instabilité (13) est un sous-virage (17) du véhicule (300) ou un survirage (19) du véhicule (300) dans la situation de conduite (15).

10. Procédé (1) selon l'une des revendications 1 à 9, présentant en outre :
- la détermination (109) d'une oscillation de braquage (111) à l'aide d'une évolution dans le temps de l'angle de braquage réel (9) ; et
en réponse à la détermination (109) d'une oscillation de braquage (111) :
- la réduction (115) de la première valeur limite (63) si une oscillation de braquage (111) qui se situe dans une bande de fréquences propres (113) du véhicule (300) est déterminée.

11. Procédé (1) selon l'une des revendications 1 à 10, présentant en outre :
- la détermination (121) d'un angle de flexion réel (11) entre un véhicule tracteur (304) et un véhicule remorque (306) du véhicule (300) ;
- la détermination (123) d'un angle de flexion théorique (119) pour la situation de conduite (15) ; et
- la réduction (117) de la première valeur limite (21) si l'angle de flexion réel (11) dépasse l'angle de flexion théorique (119) d'une valeur de tolérance d'angle de flexion (125).

12. Procédé (1) selon l'une des revendications 1 à 11, présentant en outre :
- la détermination d'une vitesse de véhicule actuelle du véhicule dans la situation de conduite ;
dans lequel la fourniture (61) d'une première valeur limite (63) pour l'écart théorique-réel (59) comprend une définition de la première valeur limite (63) au moins à l'aide de la vitesse de véhicule déterminée, dans lequel la première valeur limite (63) est de préférence indirectement proportionnelle à la vitesse de véhicule.

13. Système d'aide au conducteur (200) destiné à améliorer une tenue de trajectoire d'un véhicule (300) dans une situation de conduite (15), présentant une unité de commande (202) qui est conçue pour mettre en œuvre le procédé (1) selon l'une des revendications 1 à 12 ci-dessus.

14. Véhicule (300) présentant au moins un actionneur de véhicule (310) et un système d'aide au conducteur (200) selon la revendication 13.

15. Produit de programme informatique comportant des moyens de code de programme qui sont stockés sur un support de données lisible par ordinateur et qui mettent en œuvre le procédé (1) selon l'une des revendications 1 à 12 lorsque le produit de programme informatique est mis en œuvre sur une unité de traitement.
